# EUROPEAN PATENT APPLICATION

(11) **EP 4 668 770 A1**
(43) Date of publication of application: **24.12.2025**
(21) Application number: 24847570.9
(22) Date of filing: 11.03.2024
(51) Int. Cl.: H04N 23/63

(54) **DISPLAY CONTROL METHOD AND ELECTRONIC DEVICE**

(30) Priority: 02.08.2023 CN 202310967414
(71) Applicant: Honor Device Co., Ltd., Shenzhen, Guangdong 518040 (CN)
(72) Inventor: HU, Dashuai, Shenzhen, Guangdong 518040 (CN); ZHENG, Chengzhi, Shenzhen, Guangdong 518040 (CN); YANG, Qingliang, Shenzhen, Guangdong 518040 (CN)
(74) Representative: Epping - Hermann - Fischer
(86) International application number: PCT/CN2024/080932
(87) International publication number: WO 2025/025604

(57) **Abstract**

Embodiments of this application provide a display control method and an electronic device, and relate to the technical field of electronic devices. According to the method, a preview/video shooting scenario can be accurately identified, and a display frame rate is increased in the scenario, to avoid a problem of frame drop caused when an image that is not displayed is covered. The method may include: receiving a first operation of a user; starting a camera application in response to the first operation, and displaying a first interface on a display screen, where the first interface is a preview interface of the camera application, or the first interface is a video shooting interface of the camera application, where a display frame rate of the display screen is a first frame rate when the first interface is displayed; receiving a second operation of the user; and displaying a second interface on the display screen in response to the second operation, where the second interface is different from the preview interface or the video shooting interface, where the display frame rate of the display screen is a second frame rate when the second interface is displayed; and the first frame rate is greater than the second frame rate.

## Description

This application claims priority to Chinese Patent Application No. 202310967414.0, filed with the China National Intellectual Property Administration on August 2, 2023 and entitled "DISPLAY CONTROL METHOD AND ELECTRONIC DEVICE", which is incorporated herein by reference in its entirety.

### TECHNICAL FIELD

Embodiments of this application relate to the technical field of electronic devices, and in particular, to a display control method and an electronic device.

### BACKGROUND

When a camera application of an electronic device runs, a preview picture may be displayed on a display screen, so that a user can intuitively see a situation of a current shooting scenario.

The preview picture may include a plurality of consecutive frame images. All the plurality of consecutive frame images may be collected by a camera module of the electronic device, and then displayed on the display screen through controlling of a display driver chip of the electronic device.

Currently, due to a craft limitation of the display driver chip, a frequency at which display of the display screen is switched cannot accurately correspond to a frequency at which the camera module collects the image. As a result, a case in which, after some of the images are collected by the camera module, the images are covered by subsequently collected images without being displayed on the display screen may occur. Consequently, problems such as frame drop and frame skip of the preview picture are caused.

### SUMMARY

This application provides display control method and an electronic device, so that a preview/video shooting scenario can be accurately identified, and a display frame rate is increased in the scenario, to avoid a problem of frame drop caused when an image that is not displayed is covered.

To achieve the foregoing technical objective, this application uses the following technical solutions:
According to a first aspect, a display control method is provided, applied to an electronic device. The electronic device is configured with a display screen. A camera application is further installed in the electronic device. The method includes: receiving a first operation of a user; starting the camera application in response to the first operation, and displaying a first interface on the display screen, where the first interface is a preview interface of the camera application, or the first interface is a video shooting interface of the camera application, where a display frame rate of the display screen is a first frame rate when the first interface is displayed; receiving a second operation of the user; and displaying a second interface on the display screen in response to the second operation, where the second interface is different from the preview interface or the video shooting interface, where the display frame rate of the display screen is a second frame rate when the second interface is displayed; and the first frame rate is greater than the second frame rate. For example, the first operation may be an operation that the user taps an icon of the camera application on the display screen of the electronic device. For another example, the second operation may include an operation that the user indicates to exit the preview interface or the video shooting interface. For example, the second operation may include an operation of indicating the electronic device to enter a main interface. For another example, the second operation may include an operation of indicating the camera application to enter a gallery interface.

In this way, the electronic device can actively adjust to a high display frame rate (for example, the first frame rate) for display when entering a preset scenario (for example, a preview scenario or a video shooting scenario). Therefore, even though the display frame rate is less than a configured ideal value due to a craft problem such as a hardware DDIC, it can be ensured that the display frame rate, for example, an image output frequency of a camera module, is greater than the ideal value. Further, a problem that a frame image is covered and lost due to a low display frame rate can be resolved.

Optionally, before the first operation of the user is received, the method further includes: The electronic device displays a third interface on the display screen, where the third interface is a main interface of the electronic device, and a display frame rate of the electronic device is the second frame rate. In this implementation, before entering the preset scenario, the electronic device may use the configured second frame rate as the display frame rate. In other words, after entering the preset scenario, the electronic device may increase the display frame rate for display.

Optionally, the electronic device is configured with a camera module, and the camera module is configured to obtain image information of a shooting scenario after the camera application runs. A memory of the electronic device is configured with a buffer queue. The buffer queue is used to store a to-be-displayed image. The to-be-displayed image is generated based on the image information obtained by the camera module. After the first operation is received, the method further includes: The camera application controls the image information to be obtained by the camera module; and the electronic device generates the to-be-displayed image based on the image information, and stores the to-be-displayed image into the buffer queue. The example provides a specific image display mechanism. To be specific, production and consumption of an image is performed by using the buffer queue configured in the memory, to finally present the image on the display screen. It may be understood that, in this application, after the display frame rate is increased, a rate of image consumption from the buffer queue is correspondingly increased. Therefore, a case in which a frame image that is not displayed is covered because a production rate is greater than a consumption rate can be avoided.

Optionally, a frequency at which the camera module obtains the image information is a third frame rate, and the first frame rate is greater than or equal to the third frame rate. In this way, after the display frame rate is increased, the consumption rate is at least equal to the image production rate, so that a problem of frame drop is avoided.

Optionally, after the first operation of the user is received, the method further includes: The electronic device determines that a first view is configured, where the first view is used to draw and synthesize a to-be-displayed image of the preview interface or the video shooting interface. In this example, a specific implementation of determining to enter the preset scenario is provided. For example, when the first view is already configured in a view system, the electronic device may determine to enter the preset scenario.

Optionally, before the first interface is displayed, the method further includes: The electronic device sends a frequency increasing indication to the display screen; and the display screen configures the display frame rate as the first frame rate based on the frequency increasing indication, to facilitate display of the first interface.

Optionally, the frequency increasing indication includes a frequency increasing magnification, and the frequency increasing magnification is greater than 1. The first frame rate is equal to a product of the second frame rate and the frequency increasing magnification. Therefore, a specific solution implementation of increasing the display frame rate is provided.

Optionally, after the first operation of the user is received, and before the first interface is displayed, the method further includes: The camera application sends a first Vsync signal generation request to the electronic device; and the electronic device generates, based on the first Vsync signal generation request, a plurality of first Vsync signals based on a first time interval. The first Vsync signal is used to trigger drawing and synthesis of an image in the buffer queue.

Optionally, before the plurality of first Vsync signals are generated, the method further includes: The electronic device obtains a current display frame rate from the display screen based on the first Vsync signal generation request. The generating a plurality of first Vsync signals based on a first time interval includes: The electronic device determines the first time interval based on the current display frame rate, and generates one of the first Vsync signals every the first time interval.

Optionally, when the current display frame rate is the first frame rate, that the electronic device determines the first time interval based on the current display frame rate includes: The electronic device determines, based on the current display frame rate, that the first time interval corresponds to a reciprocal of the first frame rate.

Optionally, that the electronic device displays a first interface on the display screen includes: The electronic device obtains first image information from the buffer queue after the first Vsync signals are generated, where the first image information corresponds to the first interface; the electronic device performs drawing and synthesis in the first view based on the first image, to obtain a to-be-displayed image corresponding to the first interface; and the electronic device displays the first interface on the display screen based on the to-be-displayed image.

It may be understood that, after the display frame rate is increased, the corresponding first time interval is shortened. Therefore, the first Vsync signals can be more frequently generated, and consumption of the image in the buffer queue can be more rapidly triggered.

Optionally, the electronic device is configured with a display engine and a display driver module, and the display driver module is configured with an enabling driver unit. The method further includes: The camera application determines that a first view is configured, where the first view is used to draw and synthesize a to-be-displayed image of the preview interface or the video shooting interface; the camera application sends first indication information to the enabling driver unit by using the display engine, where the first indication information is used to indicate the enabling driver unit to enter a preset scenario, and the preset scenario includes a preview scenario and a view shooting scenario; the enabling driver generates a frequency increasing indication based on the first indication information, where the frequency increasing indication is used to indicate a display driver chip DDIC of the display screen to increase the display frame rate; and the DDIC receives the frequency increasing indication, and adjusts the display frame rate of the display screen to the first frame rate based on the frequency increasing indication. Therefore, in this application, the display engine is configured in the electronic device (for example, a framework layer of the electronic device), and an enabling driver is configured in an existing display driver in a kernel layer, so that an effect of frequency increasing in the preset scenario in the display control method provided in this application can be achieved.

Optionally, the electronic device is configured with a display synthesis module SurfaceFlinger. The method further includes: The camera application sends a first Vsync signal generation request to the SurfaceFlinger; the SurfaceFlinger obtains, from the DDIC based on the first Vsync signal generation request, that a current display frame rate is the first frame rate; the SurfaceFlinger generates one first Vsync signal every first time interval, where the first time interval corresponds to the first frame rate; and each time one first Vsync signal is generated, the SurfaceFlinger obtains the image information from the buffer queue in the memory of the electronic device for drawing and synthesis, and sends the to-be-displayed image obtained through drawing and synthesis to the display screen for display.

This application further provides the following example, to restore, when the preset scenario is exited, the display frame rate to a value before the frequency increasing. For example, the exiting the preset scenario may correspond to exiting the video shooting scenario or exiting the preview scenario.

Optionally, after the second operation of the user is received, the method further includes: The electronic device determines that a configured view does not include the first view.

Optionally, before the electronic device switches to display the second interface, the method further includes: The electronic device sends a frequency decreasing indication to the display screen; and the display screen configures the display frame rate as the second frame rate based on the frequency decreasing indication, to facilitate display of the second interface.

Optionally, after the second operation of the user is received, and before the second interface is displayed, the method further includes: The camera application sends a second Vsync signal generation request to the electronic device; and the electronic device generates, based on the second Vsync signal generation request, a plurality of second Vsync signals based on a second time interval. The second Vsync signal is used to trigger drawing and synthesis of an image in the buffer queue.

Optionally, before the plurality of second Vsync signals are generated, the method further includes: The electronic device obtains the current display frame rate from the display screen based on the second Vsync signal generation request. The generating a plurality of second Vsync signals based on a second time interval includes: The electronic device determines the second time interval based on the current display frame rate, and generates one of the second Vsync signals every the second time interval.

Optionally, when the current display frame rate is the second frame rate, that the electronic device determines the second time interval based on the current display frame rate includes: The electronic device determines, based on the current display frame rate, that the second time interval corresponds to a reciprocal of the second frame rate.

Optionally, that the electronic device displays a second interface on the display screen includes: The electronic device obtains second image information from the buffer queue after the second Vsync signals are generated, where the second image information corresponds to the second interface; the electronic device performs drawing and synthesis in the second view based on the second image, to obtain a to-be-displayed image corresponding to the second interface, where the second view is different from the first view, and the second view is used to draw and synthesize a to-be-displayed image of another interface different from the preview interface or the video shooting interface; and the electronic device displays the second interface on the display screen based on the to-be-displayed image corresponding to the second interface.

Optionally, the first view includes a surface view SurfaceView.

According to a second aspect, a display control method is provided. The method is applied to an electronic device. The electronic device is configured with a display screen. A camera application is further installed in the electronic device. The method includes: displaying a main interface on the display screen of the electronic device, where a display frame rate is a second frame rate; receiving a first operation of a user; starting the camera application in response to the first operation, and displaying a first interface on the display screen, where the first interface is a preview interface of the camera application, or the first interface is a video shooting interface of the camera application; generating a frequency increasing indication and sending the frequency increasing indication to the display screen before the first interface is displayed, where the frequency increasing indication is used to indicate the display screen to increase the display frame rate; and displaying the first interface on the display screen in response to the frequency increasing indication, where the display frame rate is a first frame rate; and the first frame rate is greater than the second frame rate.

Optionally, the method further includes: receiving a second operation of the user; displaying a second interface on the display screen in response to the second operation, where the second interface is different from the preview interface or the video shooting interface; and generating a frequency decreasing indication and sending the frequency decreasing indication to the display screen before the second interface is displayed, where the frequency decreasing indication is used to indicate the display screen to decrease the display frame rate, where the display frame rate of the display screen is the second frame rate when the second interface is displayed.

Optionally, the electronic device is configured with a camera module, and the camera module is configured to obtain image information of a shooting scenario after the camera application runs. A memory of the electronic device is configured with a buffer queue. The buffer queue is used to store a to-be-displayed image. The to-be-displayed image is generated based on the image information obtained by the camera module. After the first operation is received, the method further includes: The camera application controls the image information to be obtained by the camera module; and the electronic device generates the to-be-displayed image based on the image information, and stores the to-be-displayed image into the buffer queue. The example provides a specific image display mechanism. To be specific, production and consumption of an image is performed by using the buffer queue configured in the memory, to finally present the image on the display screen. It may be understood that, in this application, after the display frame rate is increased, a rate of image consumption from the buffer queue is correspondingly increased. Therefore, a case in which a frame image that is not displayed is covered because a production rate is greater than a consumption rate can be avoided.

Optionally, a frequency at which the camera module obtains the image information is a third frame rate, and the first frame rate is greater than or equal to the third frame rate.

Optionally, the electronic device is configured with a display engine and a display driver module, and the display driver module is configured with an enabling driver unit. The method further includes: The camera application determines that a first view is configured, where the first view is used to draw and synthesize a to-be-displayed image of the preview interface or the video shooting interface; the camera application sends first indication information to the enabling driver unit by using the display engine, where the first indication information is used to indicate the enabling driver unit to enter a preset scenario, and the preset scenario includes a preview scenario and a view shooting scenario; the enabling driver generates a frequency increasing indication based on the first indication information, where the frequency increasing indication is used to indicate a display driver chip DDIC of the display screen to increase the display frame rate; and the DDIC receives the frequency increasing indication, and adjusts the display frame rate of the display screen to the first frame rate based on the frequency increasing indication.

According to a third aspect, this application further provides an electronic device. The electronic device includes a memory, one or more processors, and one or more display screens. The memory, the display screens, and the processors are coupled. The memory is configured to store computer program code. The computer program code includes computer instructions. When the processor executes the computer instructions, the electronic device is enabled to execute the technical solutions provided in any one of the first aspect and the possible implementations of the first aspect. Alternatively, the electronic device is enabled to execute the technical solutions provided in any one of the second aspect and the possible implementations of the second aspect. For example, when entering a preset scenario, the electronic device may implement frequency increasing on a display frame rate by using the display control method provided in this application. For another example, when exiting the preset scenario, the electronic device may restore the display frame rate to a status before the frequency increasing.

According to a fourth aspect, this application further provides a chip system. The chip system is applied to an electronic device. The chip system may include one or more interface circuits and one or more processors. The interface circuits and the processors are interconnected by using lines. The interface circuit is configured to receive a signal from a memory of the electronic device, and send the signal to the processor. The signal includes computer instructions stored in the memory. When the process executes the computer instructions, the electronic device executes the technical solutions provided in any one of the first aspect and the possible implementations of the first aspect. Alternatively, the electronic device is enabled to execute the technical solutions provided in any one of the second aspect and the possible implementations of the second aspect.

According to a fifth aspect, this application further provides a computer-readable storage medium, including computer instructions. When the computer instructions are run on an electronic device, the electronic device is enabled to execute the technical solutions provided in any one of the first aspect and the possible implementations of the first aspect.

According to a sixth aspect, this application further provides a computer program product. When the computer program product runs on a computer, the computer is enabled to execute the technical solutions provided in any one of the first aspect and the possible implementations of the first aspect. Alternatively, the computer is enabled to execute the technical solutions provided in any one of the second aspect and the possible implementations of the second aspect.

It may be understood that the solutions provided in the second aspect to the sixth aspect of this application may respectively correspond to the first aspect and any possible design thereof. Therefore, beneficial effects that can be achieved are similar, and are not described herein again.

### BRIEF DESCRIPTION OF DRAWINGS

FIG. 1 is a schematic diagram of interface interaction related to a camera application provided by an electronic device;
FIG. 2 is a schematic diagram of display of a preview stream;
FIG. 3 is a schematic diagram of logic from obtaining to display of a preview stream;
FIG. 4 is a schematic diagram of logic of production and consumption of an image;
FIG. 5 is a schematic diagram of logic of production and consumption of an N^{th} frame image;
FIG. 6 is a schematic diagram of comparison between time sequences of production and consumption of a plurality of consecutive frame images;
FIG. 7 is a schematic diagram of comparison of display in a case of frame drop;
FIG. 8 is a schematic diagram of comparison between time sequences after a display control method according to an embodiment of this application takes effect;
FIG. 9 is a schematic composition diagram of an electronic device according to an embodiment of this application;
FIG. 10 is a schematic composition diagram of software of an electronic device according to an embodiment of this application;
FIG. 11 is a schematic composition diagram of an electronic device according to an embodiment of this application;
FIG. 12 is a schematic diagram of interaction between modules in a display control method according to an embodiment of this application;
FIG. 13 is a schematic diagram of interaction between modules in a display control method according to an embodiment of this application;
FIG. 14 is a schematic diagram of interaction between modules in a display control method according to an embodiment of this application;
FIG. 15A and FIG. 15B are a schematic flowchart of interaction between modules in a display control method according to an embodiment of this application; and
FIG. 16 is a schematic composition diagram of a chip system according to an embodiment of this application.

### DESCRIPTION OF EMBODIMENTS

The terms "first" and "second" below are merely intended for an objective of description, and shall not be understood as indicating or implying relative significance or implicitly indicating a quantity of indicated technical features. Therefore, features limited by "first" and "second" may explicitly or implicitly include one or more of the features. In descriptions of this embodiment, unless otherwise stated, "a plurality of" means two or more than two.

Most of current electronic devices can provide an image shooting function. The image shooting function may include image preview, image shooting, video shooting, and the like. For example, a camera application may be installed in the electronic device. After running the camera application, the electronic device can provide the image shooting function to a user by using the camera application.

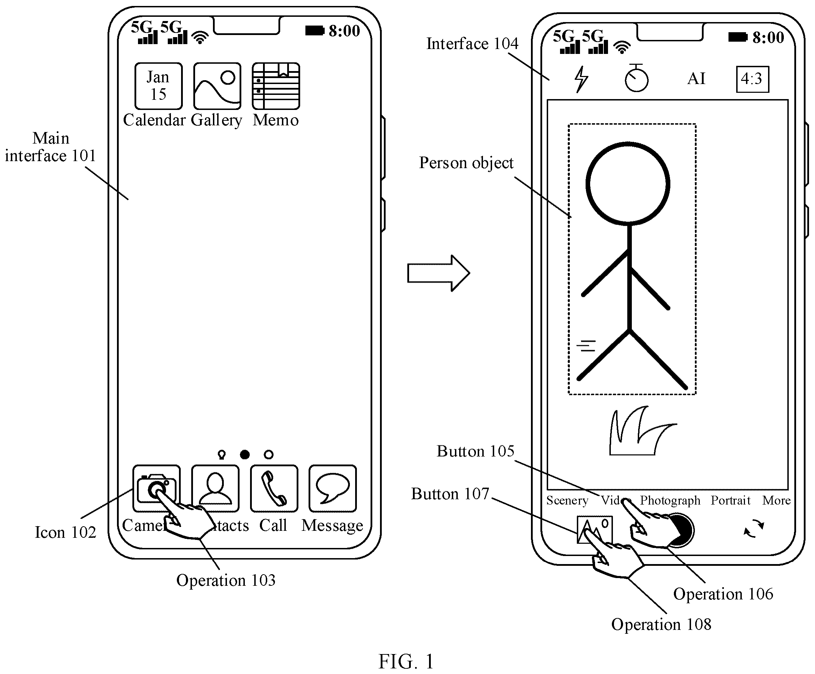

For example, the electronic device is a mobile phone. Referring to FIG. 1, a main interface 101 of the electronic device may include an icon 102 of the camera application. The user may input a tap operation 103 on the icon 102, to indicate the electronic device to run the camera application.

The electronic device may run the camera application in response to the tap operation 103. In addition, the electronic device may further switch to display an interface 104 of the camera application.

With reference to the foregoing descriptions of the image shooting function, after the electronic device runs the camera application, display of the interface 104 may correspond to one of image shooting functions that can be provided.

For example, in the example of FIG. 1, the interface 104 may include a preview interface of a function "image shooting". A preview image in a current shooting scenario may be presented to the user on the interface 104. As time passes, if a person object or another object in the current shooting scenario moves, the electronic device may correspondingly update the preview picture.

The user may further indicate the electronic device to switch to display another image shooting function.

For example, the user may input an operation 106 on a "video" button 105 on the interface 104, to indicate the electronic device to switch to provide a video shooting function.

In this case, the electronic device may correspondingly switch to display a preview image corresponding to the video shooting function on the interface 104.

For another example, the interface 104 may further include a button 107 for image viewing. When the user wants to view a shot image or video, the user may input an operation 108 on the button 107. The electronic device may correspondingly switch to display a gallery interface. The gallery interface may include a large image of a latest shot image or video, and/or a thumbnail of an image or a video stored in a gallery.

It may be understood that, in the foregoing implementation, when providing the function such as image shooting or video shooting under the indication of the user, the electronic device may display the corresponding preview interface. The electronic device may dynamically present, to the user on the preview interface, a location and a morphological change of each shot object in the shooting scenario. In a video shooting scenario, after shooting starts, when obtaining and storing a location and a morphological change of each shot object in a shooting process, the electronic device may alternatively display a video stream on a display screen in real time.

For example, the electronic device displays preview interfaces in an image shooting scenario and a video shooting scenario.

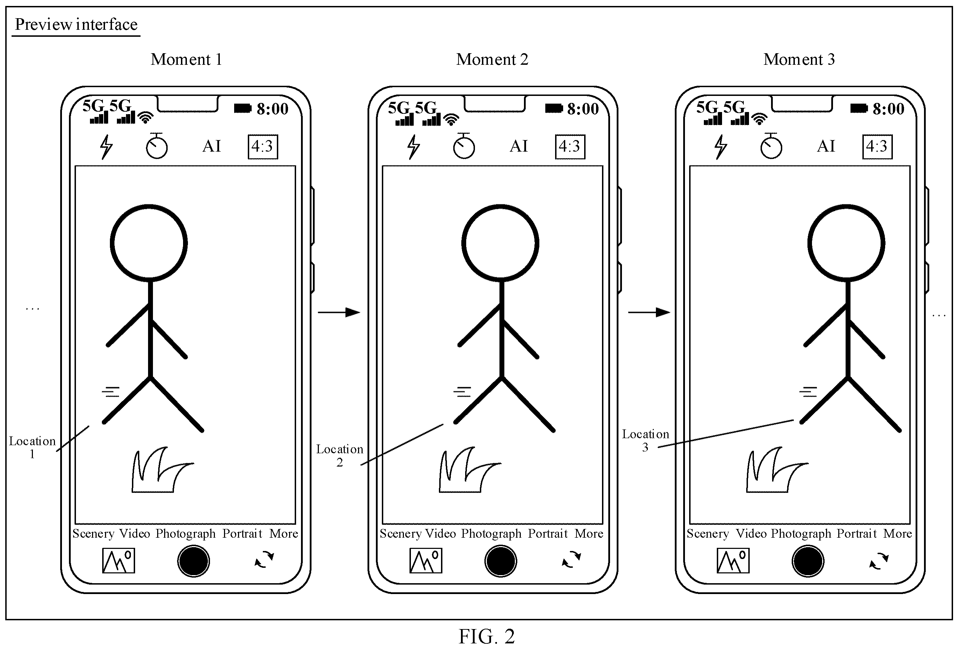

Referring to FIG. 2, at a moment 1, the electronic device may display, on the preview interface, that a person object is located at a location 1. Then, a person starts to move. In this case, at a moment 2, the electronic device refreshes the preview interface, to correspondingly display that the person object is located at a location 2. Similarly, at a moment 3, the electronic device may display that the person object is located at a location 3.

It may be understood that consecutive preview image streams may include a plurality of consecutive frame images. The electronic device may refresh display content of the display screen according to a periodicity, to provide a dynamic effect of each object in the shooting scenario shown in FIG. 2.

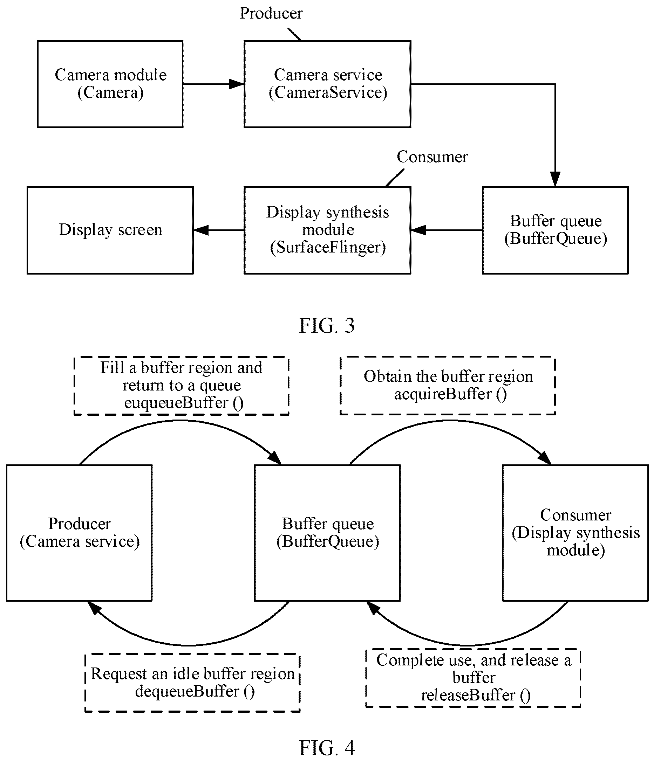

FIG. 3 shows a logical process from generation to display of any frame image.

In an example shown in FIG. 3, the electronic device may be configured with a camera module (Camera), configured to obtain image information of a current shooting scenario. The display screen is configured to display an image.

The electronic device may further be configured with a plurality of software modules for related internal processing. For example, a camera service (CameraService), a buffer queue (BufferQueue), and a display synthesis module (SurfaceFlinger) may be disposed in the electronic device.

Obtaining to display of an N^{th} frame image are used as an example. The N^{th} frame image may correspond to a preview image that is at the moment 1, the moment 2, or the moment 3 shown in FIG. 2, or any one of other moments.

The camera module may collect an optical signal of the current shooting scenario, and generate, through photoelectric conversion, RAW image information corresponding to the N^{th} frame image. The camera module may send the RAW image information corresponding to the N^{th} frame image to the camera service. The camera service may process the RAW image information corresponding to the N^{th} frame image, to obtain image information (which is, for example, referred as RGB image information of the N^{th} frame image) of the N^{th} frame image in a corresponding format such as RGB. The camera service may store the RGB image information of the N^{th} frame image in the buffer queue, to facilitate access by the display synthesis module. For example, the display synthesis module may obtain, from the buffer queue, the RGB image information of the N^{th} frame image, and obtain display information of the N^{th} frame image through processing such as synthesis. Then, the display screen may display the N^{th} frame image based on the display information.

In this application, the camera service that generates the RGB image information of the N^{th} frame image may be referred to as a producer of the RGB image information of the N^{th} frame image. Correspondingly, the display synthesis module using the RGB image information of the N^{th} frame image may be referred to as a consumer of the RGB image information of the N^{th} frame image.

It should be understood that, in an existing image display mechanism, the logical solution of production-consumption based on the buffer queue is usually used.

In an example, with reference to FIG. 4, the camera service may request an idle buffer region from the buffer queue by using a function of dequeueBuffer (). Next, the camera service may fill the buffer region with the RGB image information of the N^{th} frame image by using a function of euqueueBuffer (), and return the RGB image information to the queue. In this way, a production process of the RGB image information of the N^{th} frame image is implemented.

In a consumption process, the display synthesis module may serve as a consumer of buffer content. For example, the display synthesis module may obtain a buffer region from the buffer queue by using a function of acquireBuffer (). The buffer region may store the RGB image information of the N^{th} frame image. In this way, the display synthesis module may perform an operation such as synthesis on content in the obtained buffer, to display the corresponding N^{th} frame image on the display screen. In addition, the display synthesis module may further release the buffer by using a function of releaseBuffer () after delivery for display.

It should be noted that, in the descriptions of the solution shown in FIG. 3, after the camera service serving as the producer completes production of the RGB image information of the N^{th} frame image, the camera service may dispose the RGB image information of the N^{th} frame image in the buffer queue for subsequent consumption by the display synthesis module.

In some implementations, the RGB image information of the N^{th} frame image may be disposed in the buffer queue. In this way, when the display synthesis module needs to perform consumption of delivery for display, the display synthesis module may directly obtain, from the buffer queue, the produced RGB image information of the N^{th} frame image, and further perform processing such as synthesis based on the RGB image information of the N^{th} frame image, to obtain the display information of the N^{th} frame image and perform delivery for display.

In some other implementations, after completing production of the RGB image information of the N^{th} frame image, the camera service may store the RGB image information of the N^{th} frame image at a pre-configured location of a monitor of the electronic device. An address that is of the monitor and that is for storing the RGB image information of the N^{th} frame image may be identified by using a corresponding file descriptor. In this way, the camera service may dispose the file descriptor corresponding to the N^{th} frame image in the buffer queue to complete queuing. When the display synthesis module needs to perform consumption of delivery for display, the display synthesis module may obtain, from the buffer queue, the file descriptor corresponding to the N^{th} frame image. The display synthesis module may obtain the RGB image information of the N^{th} frame image from the corresponding location of the memory based on the file descriptor. In this way, processing such as synthesis is performed based on the RGB image information of the N^{th} frame image, to obtain the display information of the N^{th} frame image and perform delivery for display.

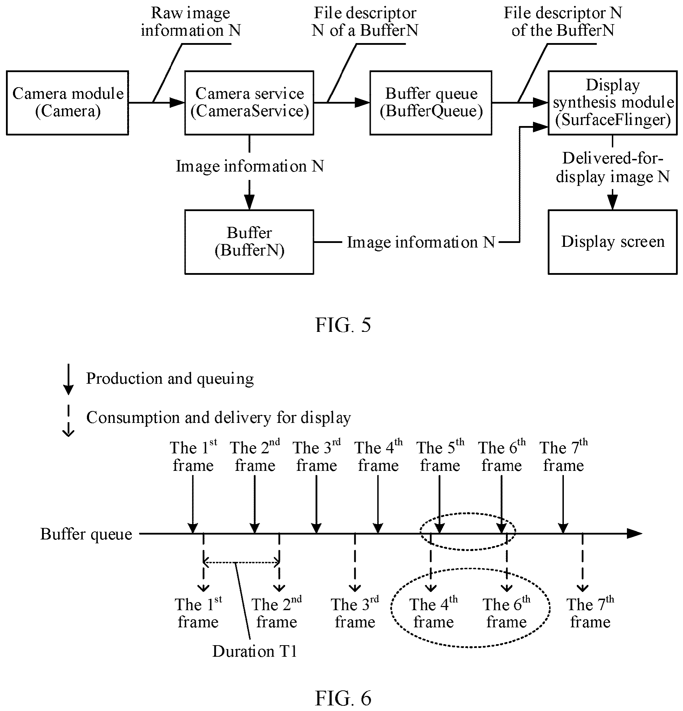

In a specific implementation, FIG. 5 shows an example of disposing the file descriptor in the buffer queue to support a logical implementation of production-consumption shown in FIG. 4. The N^{th} frame image is still used as an example. The RAW image information of the N^{th} frame image may be referred to as raw image information N, the RGB image information of the N^{th} frame image may be referred to as image information N, storage space configured in the memory and configured to store the image information N is a BufferN, the file descriptor corresponding to the image information N is a file descriptor N, and a delivered-for-display image corresponding to the N^{th} frame image is a delivered-for-display image N.

As shown in FIG. 5, the camera module may send raw image information N to the camera service. Correspondingly, the camera service may obtain the corresponding image information N through processing based on the raw image information N, and store the image information N in the BufferN. The camera service may further dispose the file descriptor N of the BufferN in the buffer queue to wait for consumption. When a new preview picture needs to be switched to be displayed, the display synthesis module may obtain the file descriptor N from the buffer queue. The display synthesis module may perform processing such as synthesis based on the file descriptor N, to obtain the delivered-for-display image N corresponding to the N^{th} frame image. In this way, the display screen can perform display based on the delivered-for-display image N, to switch to display the new preview image.

In the following example, implementation that the file descriptor shown in FIG. 5 is queued and consumed is used as an example for description.

In this case, with reference to the scenario examples in FIG. 1 and FIG. 2, after entering preview or starting video shooting, the electronic device can switch and display frame images according to solutions provided in FIG. 3 to FIG. 5.

It should be noted that a valid buffer length configured in the buffer queue is generally a length of one buffer. In other words, in the buffer queue, at most one buffer can simultaneously exist to wait for consumption. In this application, the buffer in the buffer queue may be referred to as a valid buffer.

Therefore, after the 1^{st} frame image is queued (to be specific, the camera service obtains RGB image information of the 1^{st} frame image, and disposes a corresponding file descriptor in the buffer queue), and before production and queuing of the 2^{nd} frame image are completed, the display synthesis module may perform delivery for display on and consume the 1^{st} frame image. After delivery for display and consumption of the 1^{st} frame image are completed, and before production of the 2^{nd} frame image is completed, a quantity of valid buffers in the buffer queue is 0. Cycling is performed in this way, so that normal delivery for display of consecutive frame images such as the 1^{st} frame image and the 2^{nd} frame image can be implemented.

In the foregoing implementations, the electronic device may periodically generate a synchronization signal (Vsync signal), so that the modules can trigger to perform corresponding processing based on the Vsync signal.

An application program (such as the camera application) of the electronic device may apply, to a synthesis display module, for generating the Vsync signal. The synthesis display module may negotiate with the display screen (for example, a display driver chip (DisplayDriverIC, DDIC) in the display screen) after receiving a Vsync signal application sent by the camera application, and the synthesis display module generates a Vsync signal corresponding to a display frame rate of the display screen. A frequency at which the Vsync signal is generated is the same as the display frame rate of the display screen.

For example, each time one Vsync signal is generated, the synthesis display module may trigger to obtain, from the buffer queue, a frame image that has been produced, for consumption and delivery for display. Because the frequency at which the Vsync signal is generated is the same as the display frame frequency (that is, a refresh rate) of the display screen, processing of consumption and delivery for display by the synthesis display module can smoothly support switching and display of each preview stream or each frame image in a video stream.

In addition, in this application, a frequency at which the camera service generates a frame image may be determined based on a sampling frequency of the camera module. Each time the camera module obtains raw image information of a frame image, a corresponding camera service may dispose RGB image information (or a corresponding file descriptor) of the frame image in the buffer queue, to implement production and queuing of the frame image.

A higher sampling frequency of the camera module indicates a higher production speed of the frame image.

When the sampling frequency of the camera module is the same as or close to the display frame rate of the display screen (for example, the sampling frequency and the display frame rate are both 60 Hz, 90 Hz, or 120 Hz), consumption and delivery for display of one frame image may be performed within a production interval between two adjacent frame images. Therefore, the quantity of valid buffers in the buffer queue does not exceed 1.

In the following descriptions, an example in which the sampling frequency of the camera module is the same as the display frame rate of the display screen is used.

Referring to FIG. 6, a time difference between production of the 1^{st} frame image and production of the 2^{nd} frame image is the same as a time difference between consumption of the 1^{st} frame image and consumption of the 2^{nd} frame image. A similar relationship exists between a time difference between production of subsequent frame images and a time difference between consumption of the subsequent frame images.

In this way, after the 1^{st} frame image is produced, and before the 2^{nd} frame image is produced, consumption and delivery for display of the 1^{st} frame image may be completed. Similarly, after the 2^{nd} frame image is produced, and before the 3^{rd} frame image is produced, consumption and delivery for display of the 2^{nd} frame image may be completed.

It can be learned that, in a process of producing and consuming the 1^{st} frame to the 3^{rd} frame, all buffers in the buffer queue are delivered for display and consumed, and correspondingly, smooth display of a preview stream or a video stream is presented on the display screen.

However, in some cases, a case in which no frame image is consumed in a time period of production of two adjacent frame images may occur.

In the example shown in FIG. 6, after the 5^{th} frame image is produced and queued, no consumption is performed, and production of the 6^{th} frame image is completed. In this case, the 5^{th} frame image is covered due to queuing of the 6^{th} frame image. As a result, the 6^{th} frame image may be directly delivered for display during next consumption. Consequently, the 5^{th} frame image is lost. Correspondingly, frame drop of a preview stream or a video stream is presented on the display screen.

For example, with reference to the scenario examples in FIG. 1 and FIG. 2, FIG. 7 shows a display situation in a frame drop situation. An example in which the 4^{th} frame image is displayed at the moment 1 in FIG. 2, the 5^{th} frame image needs to be displayed at the moment 2, and the 6^{th} frame image is displayed at the moment 3 is used.

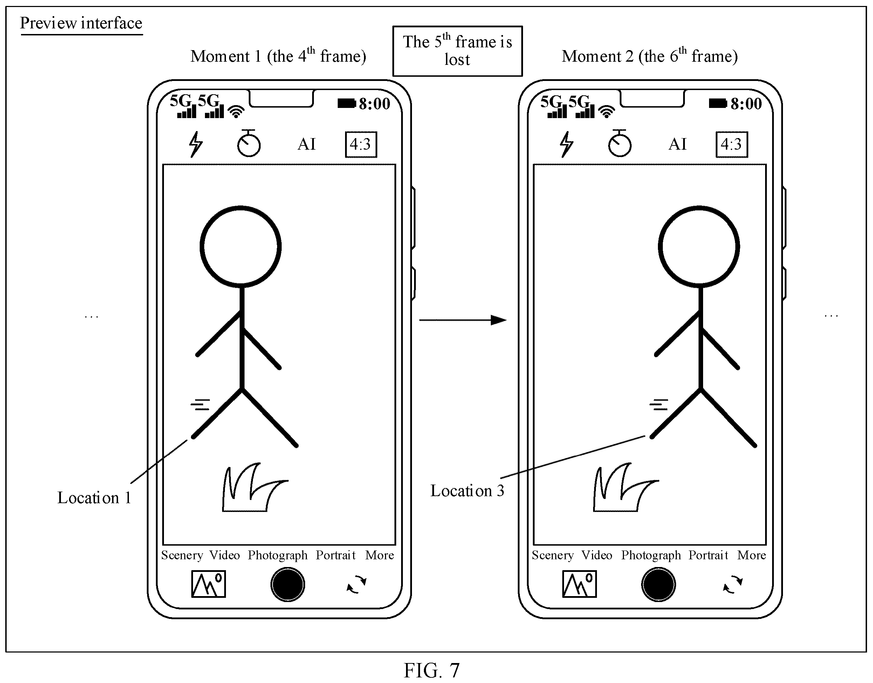

With reference to FIG. 6, the 4^{th} frame image may be normally displayed. Therefore, in FIG. 7, the 4^{th} frame image may be normally displayed at the moment 1. At the moment 2, when delivery for display and consumption are performed, the buffer queue stores the 6^{th} frame covering the 5^{th} frame. In this case, at the moment 2, the display screen jumps to display the 6^{th} frame. In other words, the display screen skips display of the 5^{th} frame, and directly jumps to the 6^{th} frame from the 4^{th} frame. The person object in the preview image directly jumps from the location 1 to the location 3. It is clear that the frame drop affects viewing experience of the user.

It may be understood that a plurality of different situations may cause the foregoing problem.

For example, the sampling frequency of the camera module and the display frame rate of the display screen are both 30 Hz.

In an actual product, the camera module may accurately obtain frame images at a frequency of approximately 30 Hz (for example, 30.01 Hz). Correspondingly, the camera service may produce frame images at a frequency of 30.01 Hz.

However, due to a limitation of a DDIC craft in the display screen, when the display frame rate of the display screen is configured as 30 Hz, an actual display frame rate may fluctuate to some extent. For example, through actual testing, the actual display frame rate may fluctuate between 29.8 Hz and 30.2 Hz, which fluctuates by approximately +/-5%.

In this case, when the actual display frame rate is less than 30.01 Hz (where a time difference between delivery for display of two adjacent frames corresponds to duration T1 shown in FIG. 6), a frequency of consumption and delivery for display is lower than a frequency of production and queuing. A difference between the frequencies gradually accumulates as frame images are processed, until consumption of one frame image is later than production of a next frame image. In this case, the frame drop problem shown in FIG. 6 that is caused when the 5^{th} frame image is covered, after being produced and queued, by the 6^{th} frame image before being consumed occurs.

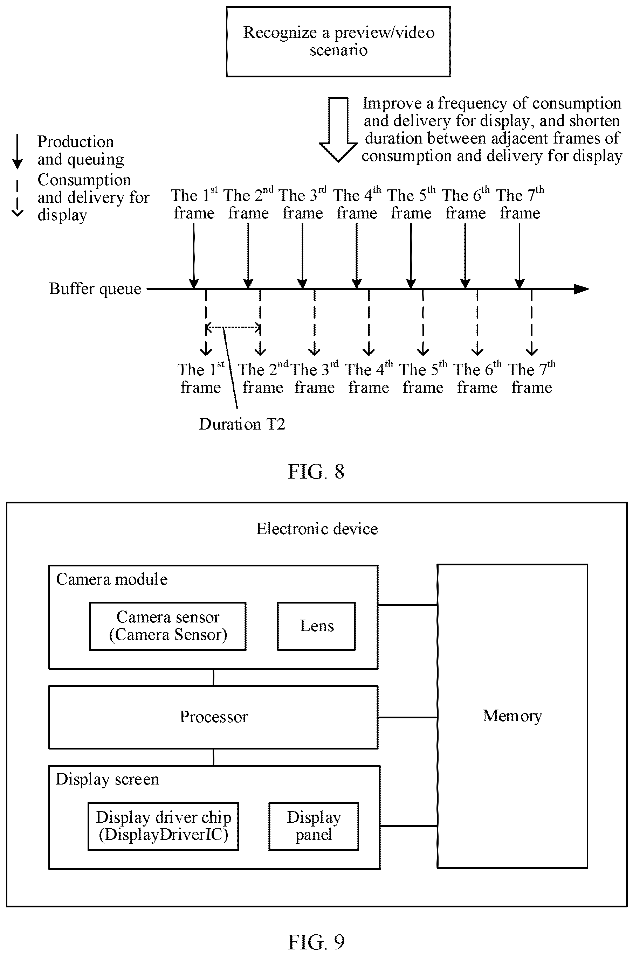

To resolve the foregoing technical problems, an embodiment of this application provides a display control method. For execution logic of this solution, refer to FIG. 8. This solution can enable an electronic device to identify a current scenario of displaying consecutive frame images (for example, identify a preview/video scenario), and automatically increase a display frame rate of a display screen in the scenario, to achieve an effect of improving a frequency of consumption and delivery for display, and shortening duration between adjacent frames of consumption and delivery for display. Therefore, even though an actual display frame rate fluctuates to a low level (for example, fluctuates to -5%), a time difference T2 between delivery for display of two adjacent frame images is larger than a time difference between production and queuing of the two adjacent frame images. Further, it is ensured that a case in which the frequency of consumption and delivery for display is lower than a frequency of production and queuing due to fluctuation of the display frame rate is avoided. Therefore, the frame drop shown in FIG. 6 or FIG. 7 is avoided.

It may be understood that, in a scenario in which the solution provided in this application takes effect, because the display frame rate (that is, a frequency of delivery for display) is improved, the time difference T2 between the delivery for display of the two adjacent frame images is less than the time difference between the production and queuing of the two adjacent frame images, and is less than a time difference T1 between the delivery for display of the two adjacent frame images in a scenario in which the solution provided in this application does not take effect. An example in which the display frame rate is a frame rate B before being increased, and the display frame rate is a frame rate A after being increased is used. The corresponding time difference T2 may correspond to the frame rate A. Specifically, the time difference T2 may be equal to 1/the frame rate A. Similarly, the time difference T1 may correspond to the frame rate B. Specifically, the time difference T1 may be equal to 1/the frame rate B.

It should be noted that the solution provided in this embodiment of this application may be applied to an electronic device of a user. The electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart house device, or a smart city device. The electronic device may be configured with a display screen and a camera module. A specific type of the electronic device is not specifically limited in this embodiment of this application.

In an example, the electronic device may include a processor, an external memory interface, an internal memory, a universal serial bus (universal serial bus, USB) interface, a charging management module, a power supply management module, a battery, an antenna 1, an antenna 2, a mobile communication module, a wireless communication module, an audio module, a speaker, a receiver, a microphone, a headset jack, a sensor module, a button, a motor, an indicator, a camera module, a display screen, and a subscriber identification module (subscriber identification module, SIM) card interface. The sensor module may include a pressure sensor, a gyroscope sensor, a barometric pressure sensor, a magnetic sensor, an acceleration sensor, a distance sensor, an optical proximity sensor, a fingerprint sensor 180H, a temperature sensor, a touch sensor, an ambient light sensor, a bone conduction sensor, and the like.

The processor may include one or more processing units. For example, the processor may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor (baseband processor, BP or BBP), and/or a neural-network processing unit (neural-network processing unit, NPU). Different processing units may be independent components, or may be integrated into one or more processors.

The processor may generate an operation control signal based on instruction operation code and a time sequence signal, to complete control of instruction obtaining and instruction execution.

A memory may be further disposed in the processor, and is configured to store instructions and data. In some embodiments, the memory in the processor may be a cache memory. The memory may store instructions or data that has been used by the processor or used at a high frequency. If the processor needs to use the instructions or data, the processor may directly invoke the instructions or data from the memory. This avoids repeated access, shortens waiting duration of the processor, and improves system efficiency.

In some embodiments, the processor may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and the like. The processor may be connected to modules such as the touch sensor, the audio module, the wireless communication module, the monitor, and the camera module through at least one of the foregoing interfaces.

It may be understood that the interface connection relationships between the modules shown in this embodiment of this application are merely example descriptions, and do not constitute a structural limitation on the electronic device. In some other embodiments of this application, the electronic device may alternatively use an interface connection manner different from that in the foregoing embodiment, or a combination of a plurality of interface connection manners.

The electronic device may implement a shooting function by using the camera module, the ISP, the video codec, the GPU, the display screen, the application processor AP, the neural-network processing unit NPU, and the like.

The camera module may be configured to collect color image data and depth data of a shot object. The ISP may be configured to process the color image data collected by the camera module. For example, during shooting, a shutter is pressed, and light is transmitted to a photosensitive element of a camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera module.

In some embodiments, the camera module may include a color camera module and a 3D sensing module.

In some embodiments, the photosensitive element of the camera of the color camera module may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

In some embodiments, the 3D sensing module may be a (time of flight, TOF) 3D sensing module or a structured light (structured light) 3D sensing module. Structured light 3D sensing is an active depth sensing technology. Basic components of the structured light 3D sensing module may include an infrared (Infrared) transmitter, an IR camera module, and the like. A working principle of the structured light 3D sensing module is to first transmit a light spot (pattern) of a particular pattern to a shot object, then receive light-spot pattern coding (light coding) on a surface of the object, compare the light-spot pattern coding with the originally projected light spot, and calculate three-dimensional coordinates of the object by using a trigonometric principle. The three-dimensional coordinates include a distance between the electronic device and the shot object. TOF 3D sensing may be an active depth sensing technology. Basic components of the TOF 3D sensing module may include an infrared (Infrared) transmitter, an IR camera module, and the like. A working principle of the TOF 3D sensing module is to calculate a distance (that is, a depth) between the TOF 3D sensing module and the shot object based on back-and-forth duration of infrared, to obtain a 3D depth-of-field image.

The electronic device may implement a display function by using the GPU, the display screen, the application processor, and the like. The GPU is a microprocessor for image processing, and is connected to the display screen and the application processor. The GPU is configured to perform mathematical and geometric computation, and render an image. The processor may include one or more GPUs, which execute program instructions to generate or change display information.

The display screen is configured to display an image, a video, and the like. The display screen includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include one or more display screens.

It should be noted that the structure shown in this embodiment of this application does not constitute a specific limitation on the electronic device. In some other embodiments of this application, the electronic device may include more or fewer components than those shown in the figure, or some components are combined, or some components are split, or the components are differently arranged. The components may be implemented in hardware, software, or a combination of software and hardware.

In another example, FIG. 9 is a schematic composition diagram of another electronic device.

As shown in FIG. 9, a processor (such as a central processing unit), a memory, a display screen, a camera module, and the like may be disposed in the electronic device.

The processor may run a computer program, to respond to various instructions delivered by a user to the electronic device. Alternatively, the processor may receive instructions delivered by an application program run in the electronic device, to manage each hardware/software module in the electronic device, so as to implement a corresponding function.

For example, with reference to FIG. 3 and FIG. 5, both the camera service and the display synthesis module may implement respective functions thereof by processing and running corresponding code.

In this example, the camera module in the electronic device may include a camera sensor (Camera Sensor) and a lens. The lens is configured to collect optical information in the shooting scenario, and the camera sensor is configured to generate a corresponding electrical signal based on the optical information. The electrical signal generated by the camera sensor may alternatively correspond to the raw image information (that is, the RAW image information) involved in the foregoing descriptions. Because there is almost no more delay in a process in which the camera service obtains the image information based on the raw image information, a frequency at which the camera service produces the image information (or produces the valid buffer) is equal to an image output frequency of the camera sensor.

The electronic device may further be configured with the display screen. The display screen may include a display driver chip (DisplayDriverIC, DDIC) and a display panel. The display driver chip may control, under control of the processor, the display panel to perform corresponding display. The display driver chip may further interact with the processor, so that the display synthesis module configured in the processor generates a Vsync signal equivalent to a display frame rate of the display screen. The Vsync signal may be used to implement a clock synchronization function, so that processing operations performed in the electronic device may be performed according to a correct time sequence.

As shown in FIG. 9, the camera module, the processor, and the display screen in the electronic device may be separately coupled to the memory. The memory may correspond to the external memory interface and the internal memory in the foregoing example. Alternatively, the memory may include on-chip storage space configured in a component having a processing function, such as the processor or the DDIC.

Based on the solution provided in this embodiment of this application, when running in the electronic device shown in FIG. 9, the processor of the electronic device may send corresponding indication information to the display driver chip when determining that a preset scenario (such as the preview scenario or the shooting scenario) is entered, so that the display driver chip improves a current display frame rate (that is, a refresh rate) of the display panel based on the indication information. In this way, a periodicity that is determined by the processor and the display driver chip through negotiation and that is for generating the Vsync signal increases with the display frame rate. Therefore, a rate of consuming a buffer in the buffer queue by the display screen is increased, and a problem such as frame drop caused when the rate of consuming the buffer is lower than a frequency of producing the buffer due to a reason such as a DDIC craft is avoided.

It may be understood that implementation of the solution shown in FIG. 9 does not constitute a limitation to the solution provided in this embodiment of this application. In some cases, the technical solutions provided in this embodiment of this application may be applied to the electronic device shown in FIG. 9.

In some other embodiments, an embodiment of this application further provides a schematic diagram of a software structure of an electronic device.

In a layered architecture, software is divided into several layers, and each layer has a clear role and task. The layers communicate with each other through a software interface. In some embodiments, the Android^{®} system is divided into five layers: an application program layer, an application program framework layer, Android runtime (Android runtime, ART), a native C/C++ library, a hardware abstract layer (Hardware Abstract Layer, HAL), and a kernel layer from top to bottom.

The application program layer may include a series of application program packages.

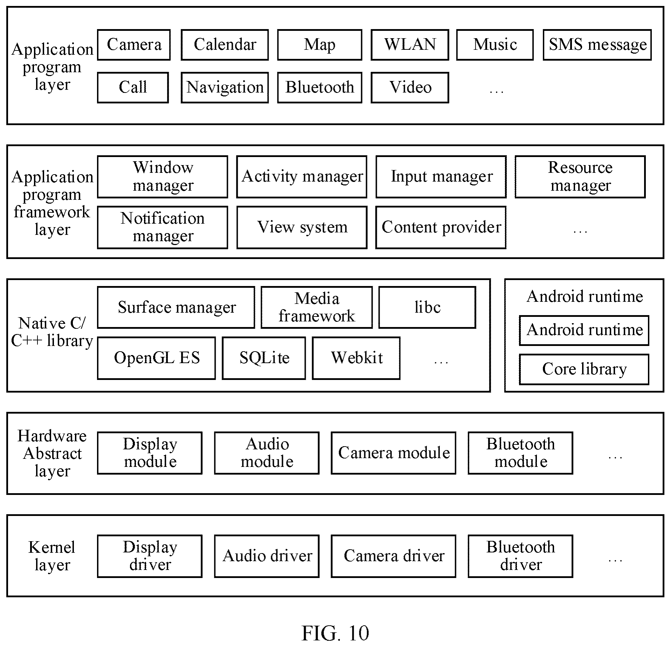

As shown in FIG. 10, the application program packages may include application programs such as Camera, Calendar, Map, WLAN, Music, SMS message, Call, Navigation, Bluetooth, and Video.

The application program framework layer is referred to as a framework layer for short, and provides an application programming interface (application programming interface, API) and a programming framework for an application at the application program layer. The framework layer includes some predefined functions.

As shown in FIG. 10, the framework layer may include a window manager, a content provider, a view system, a resource manager, a notification manager, an activity manager, an input manager, and the like.

The window manager provides a window manager service (Window Manager Service, WMS), and the WMS may be used for window management, window animation management, and surface management, and serve as a transfer station of an input system.

The content provider is configured to store and obtain data, and enable the data to be accessed by an application program. The data may include a video, an image, an audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The activity manager may provide an activity manager service (Activity Manager Service, AMS), and the AMS may be used to start, switch, and schedule a system component (for example, an activity, a service, a content provider, and a broadcast receiver), and manage and schedule work of an application process.

The input manager may provide an input manager service (Input Manager Service, SMS), and the SMS may be used to manage system input, such as touch screen input, key input, and sensor input. The IM obtains an event from an input device node, and allocates the event to an appropriate window through interaction with the WMS.

The Android runtime includes a core library and the Android runtime. The Android runtime is responsible for converting source code into machine code. The Android runtime mainly includes using an ahead of time (ahead of time, AOT) compilation technology and a just in time (just in time, JIT) compilation technology.

The core library is mainly used to provide functions of a basic Java class library, for example, a library such as a basic data structure, mathematics, an IO, a tool, a database, or a network. The core library provides an API for a user to develop an Android application.

The native C/C++ library may include a plurality of functional modules, for example, a surface manager (surface manager), a media framework (Media Framework), a libc, OpenGL ES, SQLite, and Webkit.

The surface manager is configured to manage a display subsystem, and provide fusion of 2D and 3D layers for a plurality of application programs. The media framework supports playback and recording in a plurality of commonly used audio and video formats, and static image files. The media library may support a plurality of audio and video encoding formats, for example, MPEG4, H.264, MP3, AAC, AMR, JPG, and PNG. The OpenGL ES provides drawing and operation of a 2D graphic and a 3D graphic in an application program. The SQLite provides a lightweight relational database for an application program of the electronic device.

The hardware abstract layer is referred to as an abstract layer for short, runs in user space (user space), encapsulates a driver at the kernel layer, and provides an invocation interface for an upper layer. For example, the abstract layer may include a display module, an audio module, a camera module, and a Bluetooth module.

The kernel layer (kernel layer) is a layer between hardware and software. The kernel layer includes at least a display driver, a camera driver, an audio driver, and a Bluetooth driver.

With reference to the descriptions in FIG. 9, one or more hardware components providing specific functions may further be configured below the kernel layer shown in FIG. 10. For example, the camera module, the display screen, and the like shown in FIG. 9 may be configured below the kernel layer.

Similar to the descriptions in FIG. 9, software composition shown in FIG. 10 is merely an example, and does not constitute a limitation to the electronic device involved in this embodiment of this application. In some other embodiments, the electronic device may further be configured with another software module, configured to support implementation of the technical solutions provided in the embodiments of this application.

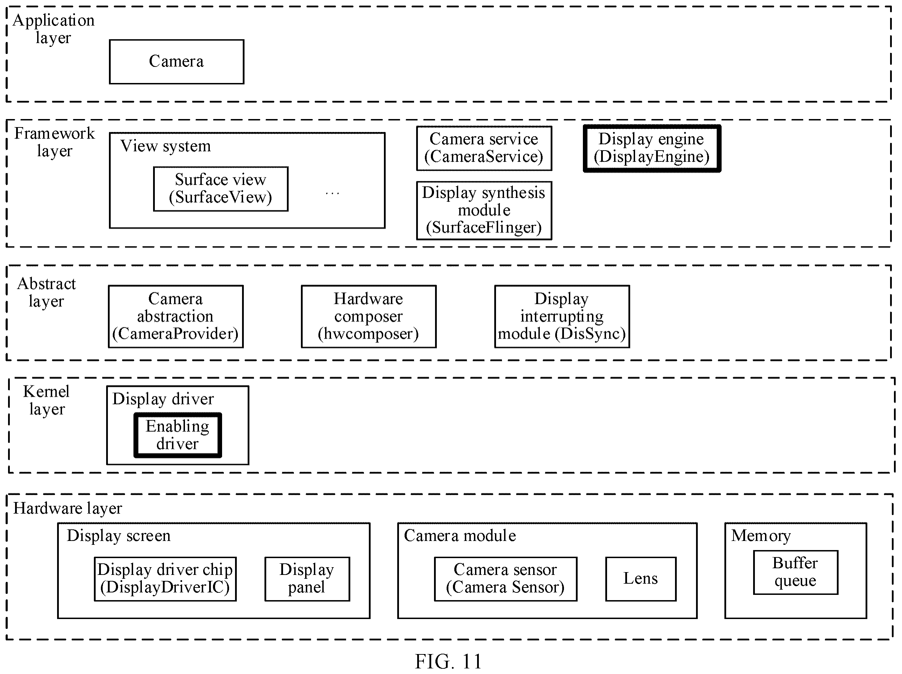

In an example, FIG. 11 is a schematic composition diagram of another electronic device according to an embodiment of this application.

As shown in FIG. 11, a camera application may be installed at an application layer. The camera application may be used to provide the image shooting function in any one of the examples in FIG. 1 to FIG. 8. The image shooting function may include image preview, image shooting, video shooting, and the like.

A camera service (CameraService) may be configured at a framework layer. A camera assembly supports development of the camera service. A developer may implement access, operation, and development of a new function of camera hardware by using an open interface. Most common operations are, for example, previewing, shooting, and video recording. The CameraService service serves as an important ring of the camera assembly, provides an IPC interface for the app layer above, and completes creation of a CameraDevice device, session management, and the like below.

A display synthesis module (SurfaceFlinger) may be further configured at the framework layer. With reference to the foregoing descriptions, the SurfaceFlinger may be configured to manage a process of delivery for display and consumption of an image. The SurfaceFlinger may further generate a Vsync signal by interacting with a DDIC in a display screen, to manage triggering of each specific operation.

When the camera application is run, different views (Views) may be created based on different currently displayed elements. One or more Views may form a view system. In some embodiments, when the camera application needs to display a preview stream or a video stream, a surface view (SurfaceView) may be created to store, at any time, a frame image that needs to be correspondingly displayed. It may be understood that a largest difference between the Surface View, serving as a special view in Android^{®}, and another view (such as a TextView or a Button) lies in that the SurfaceView and a corresponding view container are not at a same view layer. Display of a UI corresponding to the SurfaceView may not be completed in an independent thread. In this way, drawing of the SurfaceView does not affect running of a main thread. Therefore, the SurfaceView is usually used to display dynamic or complex images and animations.

In this embodiment of this application, the framework layer of the electronic device may further be configured with a display engine (DisplayEngine). The display engine may generate and send corresponding indication information (such as an indication 132) when the display engine is currently in a preset scenario (such as the preview scenario or the shooting scenario), so that a display frame rate of the display screen in the current scenario is increased. Correspondingly, in some other cases, when the display engine exits the preset scenario, the display engine may generate and send corresponding second indication information, so that the display screen decreases the display frame rate to a normal level.

In the example in FIG. 11, the abstract layer may include camera abstraction (CameraProvider), a hardware composer (hwcomposer, HWC), and a display interrupting module (DisSync).

The CameraProvider may be used to cooperate with the camera service, to implement functions of discovering, querying, and opening each camera device. Image information generated by using the camera module and control information delivered to the camera module may both be transmitted and delivered/uploaded by using the CameraProvider.

The hardware composer is used to determine to synthesize a buffer region by using available hardware. For example, in some embodiments, the HWC may be used to synthesize a delivered-for-display image independently or in cooperation with the SurfaceFlinger, to obtain related data of the delivered-for-display image. In another embodiment, the HWC may be further used to obtain information that is sent by the display screen and that is related to the display frame rate of the display screen, and transparently transmit the information.

The display interrupting module (DisSync) may be configured to obtain/determine the display frame rate of the display screen, and send the display frame rate to the SurfaceFlinger for processing, so that the SurfaceFlinger generates a corresponding Vsync signal.

In this embodiment of this application, as a generation body of the Vsync signal, the SurfaceFlinger may generate one or more different types of Vsync signals, and each type of Vsync signal may be cyclically generated based on a periodicity, to indicate a corresponding module/component to trigger to perform a corresponding operation.

For example, in some embodiments, the one or more different types of Vsync signals may include a first-type Vsync signal. The first-type Vsync signal may be used to indicate the SurfaceFlinger. Each time the first-type Vsync signal is generated, the SurfaceFlinger obtains a buffer from the buffer queue for consumption and delivery for display. In some implementations, the first-type Vsync signal may be generated based on a SurfaceFlinger Vsync event. For example, after obtaining the display frame rate of the display screen, the display interrupting module sends the SurfaceFlinger Vsync event to the SurfaceFlinger. In response to the SurfaceFlinger Vsync event, the SurfaceFlinger generates the first-type Vsync signal at a frequency the same as the display frame rate. In other words, the first-type Vsync signal may be used to trigger the SurfaceFlinger to perform consumption and delivery for display.

In some embodiments, the one or more different types of Vsync signals may include a second-type Vsync signal. The second-type Vsync signal may be used by the camera application to deliver a rendering indication at a corresponding moment. It may be understood that the camera application may apply for the second-type Vsync signal from the SurfaceFlinger when display of an image interface (for example, display of a preview stream or a video stream) is required. Correspondingly, the SurfaceFlinger may generate the second-type Vsync signal based on an app Vsync event from the display interrupting module at a frequency the same as the display frame rate. The second-type Vsync signal may be sent to the camera application, so that the camera application delivers, based on the second-type Vsync signal, instructions such as starting shooting and starting image collection. In other words, the second-type Vsync signal may be used to trigger the camera application to deliver an instruction corresponding to a new frame image.

Still referring to FIG. 11, the kernel layer below the abstract layer may include a plurality of driver modules such as the display driver. In this example, the display driver may be configured with an enabling driver module (which is referred to as an enabling driver for short). The enabling driver may be used to deliver a frequency increasing indication to the display screen. The frequency increasing indication may carry frequency increasing reference information, to indicate the display screen to increase the display frame rate based on the frequency increasing reference information. For example, the frequency increasing reference information may include a frequency increasing magnification, and the frequency increasing magnification is greater than 1. Correspondingly, after receiving the frequency increasing indication, the display screen may increase the display frame rate. An increased display frame rate may be obtained by increasing the current display frame rate by a magnification corresponding to the frequency increasing magnification. For example, when the frequency increasing magnification is 1.2, the increased display frame rate (for example, a frame rate A) may be 1.2 times of the display frame rate (for example, the frame rate B) before the increasing. In some implementations, the enabling driver may send the frequency increasing indication when receiving the indication 132 from the display engine.

Correspondingly, in some other scenarios, the enabling driver correspondingly exits the preset scenario when receiving the second indication information. In this case, the enabling driver may generate and send frequency decreasing reference information. The frequency decreasing reference information may be used to indicate the display screen to decrease the current display frame rate to the level that is before the frequency increasing. For example, the display screen may adjust to decrease the current display frame rate (for example, the frame rate A) to the previous display frame rate (for example, the frame rate B) based on the frequency decreasing reference information.

In the example in FIG. 11, the hardware components configured in the electronic device are simultaneously provided, and the hardware components may form a logical hardware layer. The hardware components may correspond to the example in FIG. 9. For example, the buffer queue used to store the produced image information (or the corresponding file identifier) may be disposed in a memory at the hardware layer.

The solutions provided in the embodiments of this application may all be applied to an electronic device including the compositions shown in FIG. 11.

The solutions provided in the embodiments of this application are described in detail below with reference to the compositions shown in FIG. 11.

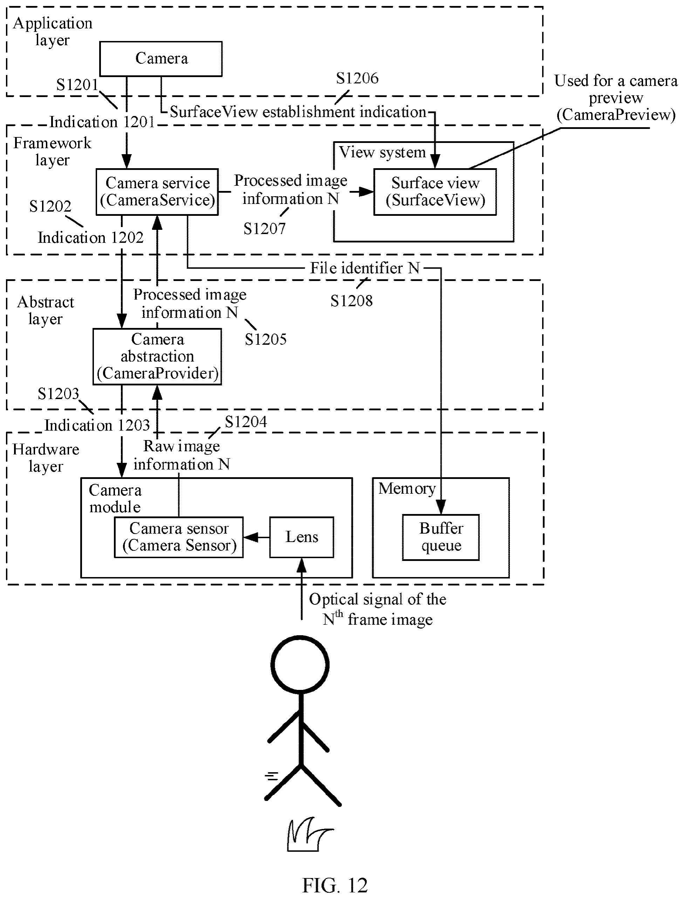

For example, FIG. 12 is a schematic diagram of interaction between modules in a display control method according to an embodiment of this application. According to a solution implementation shown in FIG. 12, production and queuing of a to-be-displayed image in a preset scenario (such as a preview scenario or a video scenario) can be implemented. Production and queuing of the N^{th} frame image is used as an example.

As shown in FIG. 12, the solution may include the following steps.

S1201: A camera application delivers an indication 1201 to a camera service.

The indication 1201 may be used to indicate an electronic device to collect a new image (for example, the N^{th} frame image).

In an example, the N^{th} frame image is the 1^{st} frame image collected after the camera application is started.

After starting to run, the camera application applies for a Vsync signal from a SurfaceFlinger. Correspondingly, the SurfaceFlinger may generate a second-type Vsync signal and send the second-type Vsync signal to the camera application. Next, the camera application may deliver the indication 1201 when the second-type Vsync signal arrives. A specific generation mechanism of the second-type Vsync signal is subsequently described in detail.

S1202: The camera service sends an indication 1202 to camera abstraction.

S1203: The camera service delivers an indication 1203 to a camera module.

The indication 1202 may be obtained based on the indication 1201. Similarly, the indication 1203 may be obtained based on the indication 1202. Therefore, the indication 1203 may be used to indicate the camera module to start (or continue) collecting the new image.

S1204: The camera module obtains raw image information of the N^{th} frame image, and sends the raw image information to the camera abstraction.

After receiving the indication 1203, the camera module may send, to the camera abstraction, an electrical signal (that is, raw image information N) that is generated by a camera sensor and that corresponds to a current scenario.

It may be understood that, in some implementations, after a light hole of a lens is opened, the lens continuously illuminates optical signals to the camera sensor. Correspondingly, the camera sensor may generate, based on the optical signal, an electrical signal (that is, the RAW image information of the N^{th} frame image, in other words, the raw image information N) currently corresponding to the N^{th} frame image. Therefore, after obtaining the indication 1203, the camera sensor may send the raw image information N to the camera abstraction.

S1205: The camera abstraction obtains processed image information N based on the raw image information N, and sends the processed image information N to the camera service.

The processed image information N may correspond to the image information N shown in FIG. 5, in other words, correspond to the RBG image data of the N^{th} frame image.

In this example, an example in which the camera abstraction directly sends, to the camera service, data of the processed image information N obtained through processing is used. With reference to the foregoing descriptions about the file descriptor, in some other implementations, the camera abstraction may store the processed image information N in the BufferN of the memory, and send a file descriptor N corresponding to the BufferN to the camera service.

Therefore, the camera service may obtain the processed image information N of the N^{th} frame image.

In some other implementations, the camera abstraction may perform no processing on the raw image information N, but directly transmit the raw image data N to the camera service for processing, so that the camera service obtains the processed image information N. In some implementations, transmission of the data may alternatively be implemented by storing a file descriptor corresponding to the information.

It may be understood that an execution process of S1201 to S1204 may be applied to any scenario in a running process of the camera application, for example, an image shooting scenario, a preview scenario, or a video scenario.

In the preview scenario or the video scenario, the camera application may perform the following S1206 to S1208, to implement processing different from that in another scenario such as the shooting scenario.

S1206: The camera application sends a SurfaceView establishment indication.

For example, the camera application may send the SurfaceView establishment indication when the camera application enters the preview scenario (corresponding to that display of a preview stream is required) or the video scenario (corresponding to that display of a video stream is required).

In a specific implementation, with reference to FIG. 1, when a user opens a camera, that is, inputs the operation 103, the camera enters the preview scenario by default. Alternatively, when the user inputs the operation 106 on the button 105, the camera enters the video scenario.

In this case, correspondingly, after receiving the operation 103 of the user, the camera application may perform S1206. Alternatively, after receiving the operation 106 input by the user, the camera application may perform S1206.

That the preview scenario is entered is used as an example below.

Correspondingly, in a view system, a SurfaceView may be established for a camera preview (CameraPreview). It may be understood that, only in the preview scenario or the video scenario, the electronic device establishes the corresponding SurfaceView in the current scenario. In other words, the establishment of the SurfaceView indicates that the electronic device enters the preview scenario or the video scenario.

S1207: The camera service draws the processed image information N on the SurfaceView.

For example, before the camera service obtains the processed image information N corresponding to the N^{th} frame image, the corresponding SurfaceView is already established. After S1205 is performed, the camera service may draw the N^{th} frame image on the SurfaceView based on the processed image information N.

S1208: The camera service stores a file identifier N in a buffer queue.

For example, with reference to the descriptions in FIG. 5, after obtaining the processed image information N in S1205, the camera service may further store, in the buffer queue, the file identifier N corresponding to the N^{th} frame image. In this way, the N^{th} frame image is queued.

It may be understood that, in the example in FIG. 12, the N^{th} frame image may be any frame image in the preview stream or the video stream. If the N^{th} frame image is not the 1^{st} frame image in the preview stream or the video stream, the camera does not need to repeatedly perform S1206 to establish a new SurfaceView. After obtaining the processed image information N of the N^{th} frame image, the camera service may directly draw the new image on an existing Surface View by covering a previous image.

With reference to the foregoing descriptions about consumption of a produced buffer and a trigger mechanism of producing a new buffer, all related operations may be performed by using the Vsync signal generated by the SurfaceFlinger.

The Vsync signal may include a first-type Vsync signal and a second-type Vsync signal according to function division.

The first-type Vsync signal may be used to trigger consumption and delivery for display of the SurfaceFlinger.

The second-type Vsync signal may be used to trigger the camera application to deliver a related instruction, for example, deliver the indication 1201 shown in FIG. 12.

Using the first-type Vsync signal as an example, the SurfaceFlinger may repeatedly generate the first-type Vsync signal at a time interval.

The time interval between two adjacent first-type Vsync signals may be equal to a current display switching time interval that is of two adjacent frame images on the display screen and that is provided by the DDIC in the display screen. In other words, a frequency at which the first-type Vsync signal is generated is equal to the current display frame rate of the display screen from the DDIC.

With reference to the foregoing descriptions about a trigger mechanism of consumption of a valid buffer in the buffer queue, each time one first-type Vsync signal arrives, the corresponding SurfaceFlinger obtains a buffer from the buffer queue for consumption and delivery for display.

However, in the problem scenario shown in FIG. 6, due to a reason such as a craft error of the DDIC, the display frame rate (that is, a refresh rate) of the display screen is slightly lower than a frequency at which the camera module obtains the new image. As a result, the frequency at which the first-type Vsync signal is generated is lower than an image queuing frequency. Further, a problem of frame drop is caused.

In this embodiment of this application, when entering the preset scenario, the electronic device may automatically increase the display frame rate. An increased display frame rate is correspondingly increased with the frequency at which the first-type Vsync signal is generated. Therefore, even though the display frame rate is decreased to a limit (for example, the display frame rate is decreased by -0.5%) due to the DDIC craft, it can be ensured that the frequency at which the first-type Vsync signal is generated is greater than or equal to an image output frequency (that is, a frequency at which the camera service performs queuing processing on the processed image information) of the camera sensor. Further, a problem of frame drop caused when an image is covered before the image is consumed is avoided.

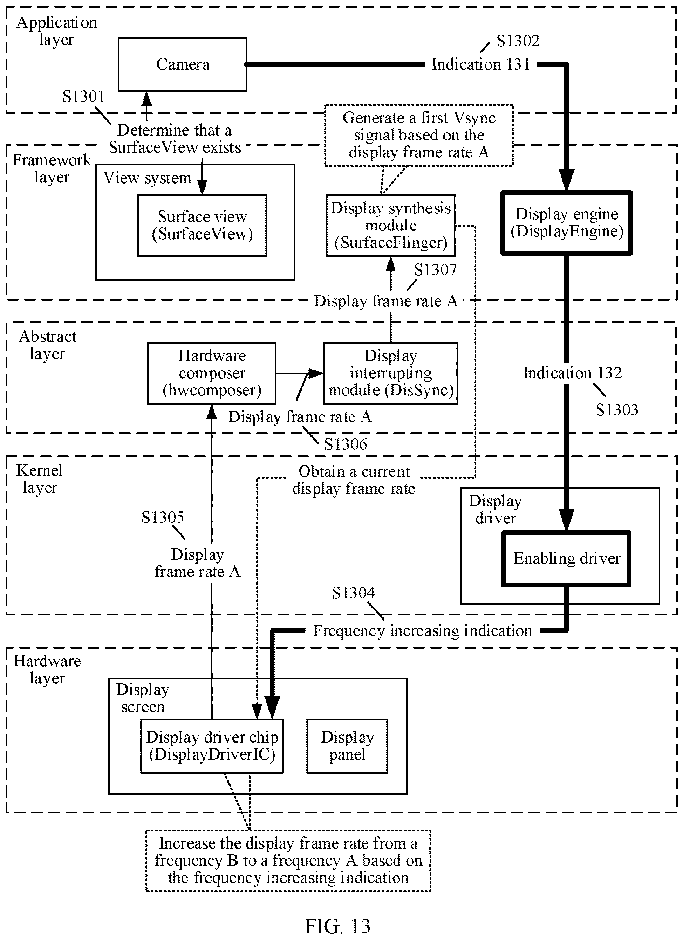

In a specific example, FIG. 13 is a schematic diagram of interaction between modules in another display control method. According to a solution implementation shown in FIG. 13, an electronic device can accurately recognize a preset scenario (such as a preview scenario or a video scenario), and further trigger frequency increasing processing.

As shown in FIG. 13, the solution may include the following steps.

S1301: A camera application determines that a SurfaceView exists.

With reference to the foregoing descriptions, the SurfaceView may be established when the camera application enters a preview scenario or a video scenario.

In this example, the camera application may determine, based on that the SurfaceView exists, that the preview scenario or the video scenario is entered.

In some other embodiments, when performing S1206 shown in FIG. 12, the camera application may determine that the SurfaceView exists, to further determine that the preview scenario or the video scenario is entered.

S1302: The camera application sends an indication 131 to a display engine. The indication 131 is used to indicate that a preset scenario is currently entered. The preset scenario includes a scenario in which a plurality of consecutive frame images need to be displayed based on images collected by a camera module, such as the preview scenario or the video scenario.

S1303: The display engine generates an indication 132 and sends the indication 132 to an enabling driver.

For example, first indication information may be used to indicate the enabling driver to configure frequency increasing processing as starting.

In a different implementation, content of the first indication information may be different. Based on a pre-determined/configured correspondence, the enabling driver may determine, based on the first indication information, that the frequency increasing processing needs to be configured as starting.

For example, the first indication information may include "1" or "true". Correspondingly, after receiving "1" or "true", the enabling driver determines that the frequency increasing processing needs to be configured as starting.

S1304: The enabling driver generates a frequency increasing indication, and sends the frequency increasing indication to a display driver chip of a display screen.

For example, the frequency increasing indication may carry frequency increasing reference information. The frequency increasing reference information may be used by the DDIC to perform frequency increasing based on the frequency increasing reference information.

In this application, a frequency increasing magnification may be pre-configured in the enabling driver, and the frequency increasing magnification may be a number greater than 1. For example, the frequency increasing magnification may include one or more values such as 1, 1.2, 1.5, 1.8, and 2. The enabling driver may add the frequency increasing magnification to the frequency increasing reference information and send the frequency increasing reference information to the DDIC.

In some implementations, after receiving the indication 132, the enabling driver may send the plurality of frequency increasing magnifications to the DDIC together, so that the DDIC flexibly selects an appropriate frequency increasing degree.

In some other implementations, the frequency increasing magnification may alternatively be determined by the camera application or the display engine.

For example, the indication 131 or the indication 132 may carry the frequency increasing magnification determined by the camera application. In this way, after receiving the indication 132, the enabling driver may add the frequency increasing magnification carried in the indication 132 to the frequency increasing indication, and send the frequency increasing indication to the DDIC. It may be understood that, the camera application, serving as an upper-layer application of a preview stream/video stream, may be capable of learning a current shooting scenario and/or current related information of the electronic device. When light in the shooting scenario is dark, a shot object moves at a high speed (for example, displacement of a same object in adjacent frame images is greater than a preset distance), and/or load of the electronic device is low, the camera application may select a high frequency increasing magnification, to improve a display frame rate of the display screen and a frequency at which a first-type Vsync signal is generated as much as possible within a proper range. Further, good viewing experience of the preview stream/video stream is achieved.

For another example, after receiving the indication 131 based on S1302, the display engine may select a frequency increasing magnification as required, and add the frequency increasing magnification to the indication 132.

S1305: The display driver chip sends a display frame rate A to a hardware composer (HWC).

S1306: The hardware composer sends the display frame rate A to a display interrupting module.

S1307: The display interrupting module sends the display frame rate A to a display synthesis module.

Through S1305 to S1307, the SurfaceFlinger may obtain the display frame rate currently provided by the DDIC.

It may be understood that, after S1304 is performed, the DDIC may receive the frequency increasing indication carrying the frequency increasing magnification. Correspondingly, the DDIC may increase the current display frame rate based on the frequency increasing magnification. For example, before the frequency increasing processing, the current display frame rate is a frame rate B. After the frequency increasing processing, the display frame rate is the frame rate A. The frame rate A/the frame rate B=the frequency increasing magnification. Therefore, the SurfaceFlinger may generate the first-type Vsync signal or both the first-type Vsync signal and a second-type Vsync signal based on the frame rate A. The frequency at which the first-type Vsync signal is correspondingly generated is equal to the higher frame rate A.

In some implementations, S1305 to S1307 may be performed under an indication of the SurfaceFlinger.

For example, referring to FIG. 13, after the camera application requests a Vsync signal, the SurfaceFlinger may directly or indirectly send, to the DDIC, a message of obtaining the current display frame rate. Correspondingly, the DDIC may feed back, to the SurfaceFlinger through S1305 to S1307, the frame rate A obtained after the frequency increasing.

Therefore, according to the solution shown in FIG. 13, in the preset scenario, the DDIC may trigger the frequency increasing processing, so that the display frame rate of the display screen is increased. Correspondingly, the SurfaceFlinger may generate the first-type Vsync signal based on the increased display frame rate.

The SurfaceFlinger may perform consumption and delivery for display on an existing frame image based on the generated first-type Vsync signal.

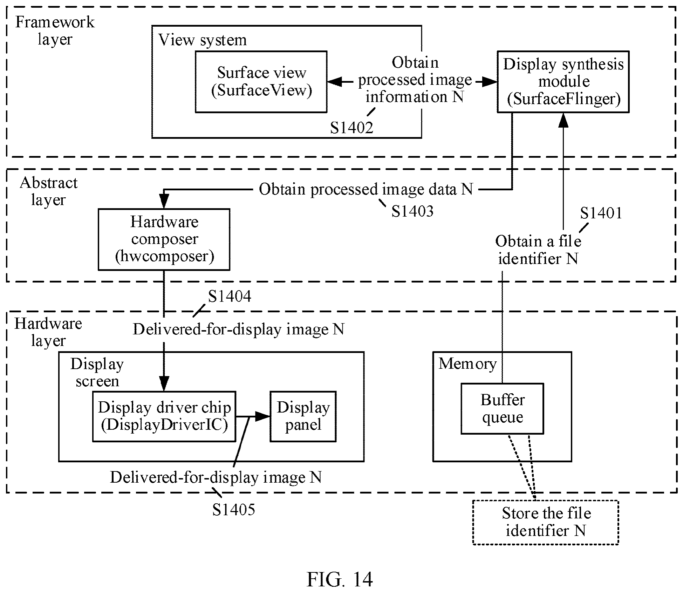

For example, referring to FIG. 14, processing of delivery for display on an existing image can be implemented according to this solution. For example, with reference to FIG. 12, an example in which the buffer queue includes the file identifier N of the N^{th} frame image is used.

As shown in FIG. 14, the solution may include the following steps.

S1401: After a first-type Vsync signal arrives, a SurfaceFlinger obtains a file identifier N from a buffer queue.

S1402: The SurfaceFlinger obtains processed image information N based on the file identifier N.

S1403: The SurfaceFlinger sends the processed image information N to a hardware composer (HWC) for synthesis processing, to obtain a delivered-for-display image N.

S1404: The hardware composer sends the delivered-for-display image N to a display driver chip.

S1405: The display driver chip controls, based on the delivered-for-display image N, a display panel to perform refreshing display.

It should be noted that, in the example in FIG. 14, an example in which the HWC performs synthesis processing of the N^{th} frame image is used for description. In some other embodiments, the SurfaceFlinger may alternatively be configured to perform synthesis processing to obtain the corresponding delivered-for-display image N, or the SurfaceFlinger and the HWC may cooperate to complete synthesis processing, so as to obtain the corresponding delivered-for-display image N.

It may be understood that, in the example in FIG. 14, delivery for display and consumption of the N^{th} frame image is implemented by using one first-type Vsync signal. The N^{th} frame image may be any frame image in a preview stream/video stream.

Therefore, after a next first-type Vsync signal arrives, the electronic device may perform delivery for display and consumption of a corresponding subsequent frame image.

For example, the first-type Vsync signal corresponding to S1401 is a first-type Vsync signal V0. After the first-type Vsync signal V0 arrives, the SurfaceFlinger performs delivery for display and consumption of the N^{th} frame image.

A next first-type Vsync signal adjacent to the first-type Vsync signal V0 is a first-type Vsync signal V1. Correspondingly, the electronic device may continue to repeatedly perform the solution implementation shown in FIG. 14, to perform delivery for display and consumption of a subsequent image based on the first-type Vsync signal V1.

An example in which production and queuing of the (N+1)^{th} frame image is already completed before the first-type Vsync signal V1 arrives is used. After the first-type Vsync signal V1 arrives, the electronic device may implement delivery for display and consumption of the (N+1)^{th} frame image according to the solution shown in FIG. 14.

In some other scenarios, due to the frequency increasing processing for the display frame rate shown in FIG. 13, duration between the first-type Vsync signal V1 and the first-type Vsync signal V0 is shortened. Therefore, the electronic device can perform consumption and delivery for display of an existing image more quickly.

It may be understood that, in the solution implementation shown in FIG. 13, the electronic device may enable, through processing of S1302 to S1304, the DDIC to perform frequency increasing processing on the current display frame rate. Therefore, a frequency of consumption and delivery for display in the corresponding scenario is improved.

In some other scenarios, when it is determined that the preset scenario is exited (for example, the preview scenario is exited or the video scenario is exited), the camera application may further perform a rollback operation on the frequency increasing processing according to a solution implementation similar to that in FIG. 13, so that the display screen can switch and display an image in a non-preset scenario by using the frame rate before the frequency increasing processing.

For example, the camera application may determine, based on that the SurfaceView does not exist in a current view system, that the preset scenario is exited. Correspondingly, the camera application may indicate, via the display engine and the enabling driver, the DDIC to perform the rollback operation.

For example, the camera application may send an indication 1302 to the display engine, to indicate the display engine to end frequency increasing. Correspondingly, the display engine may send second indication information to the enabling driver. The enabling driver may generate and send frequency decreasing reference information based on the received second indication information. The frequency decreasing reference information may be used to indicate the display screen to decrease the current display frame rate to the level that is before the frequency increasing. For example, the display screen may adjust to decrease the current display frame rate (for example, the frame rate A) to the previous display frame rate (for example, the frame rate B) based on the frequency decreasing reference information.

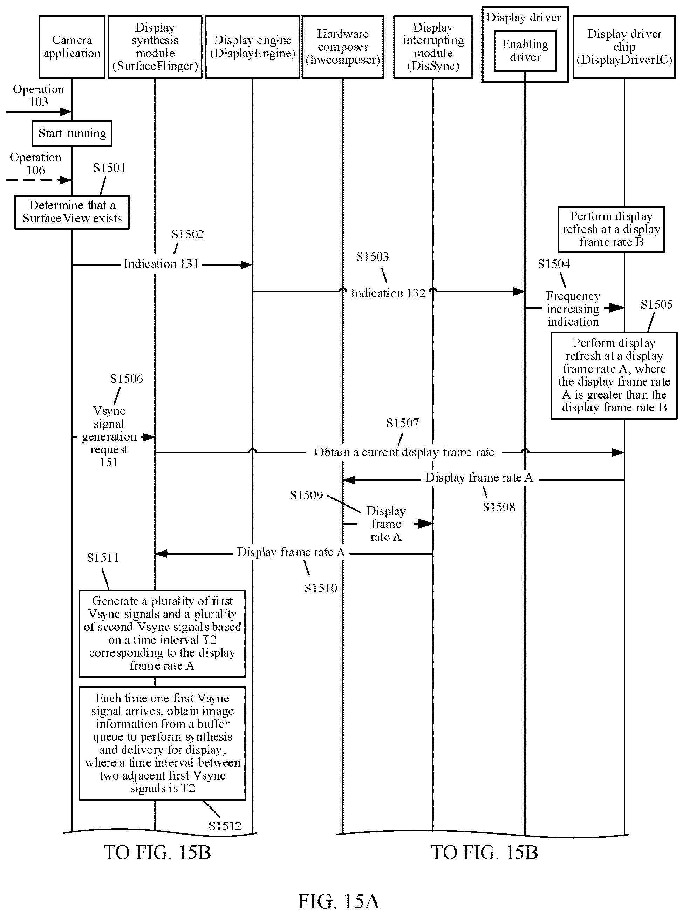

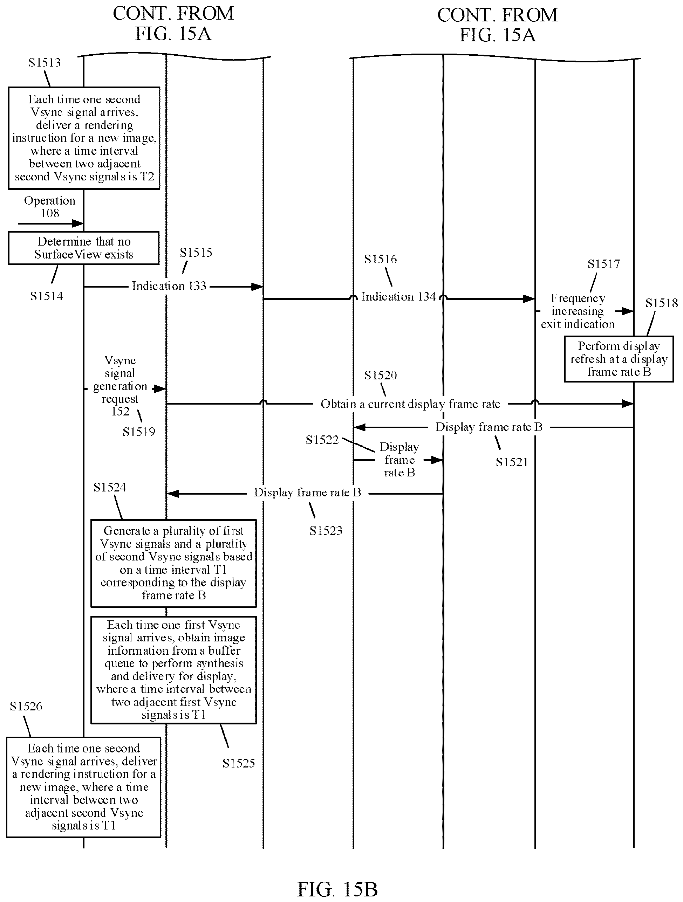

To describe the technical solutions provided in the embodiments of this application more clearly, the solution implementations provided in the embodiments of this application continue to be described below with reference to a schematic flowchart of interaction between modules provided in FIG. 15A and FIG. 15B.

As shown in FIG. 15A and FIG. 15B, the solution may include the following steps.

S1501: A camera application determines that a SurfaceView exists.

For example, the camera application may start to run after receiving an operation 103 input by a user.

With reference to the descriptions of FIG. 1, in some embodiments, after the camera application starts to run, a preview scenario may be entered by default. Correspondingly, the camera application may determine, by performing S1501, that a preset scenario including the preview scenario is entered.

In some other embodiments, as shown in FIG. 15A and FIG. 15B, the camera application may alternatively receive an operation 106 input by the user, and correspondingly enter a video shooting scenario. Similar to the foregoing descriptions, the camera application may determine, by performing S1501, that a preset scenario including the video shooting scenario is entered.

In this way, after determining that the preset scenario is entered, the electronic device may perform the following S1502.

S1502: The camera application sends an indication 131 to a display engine.

For example, the indication 131 may correspond to the indication 131 in S1302 in FIG. 13. The display engine may learn, based on the indication 131, that frequency increasing processing needs to be triggered.

S1503: The display engine sends an indication 132 to an enabling driver.

For example, the indication 132 may correspond to the indication 132 shown in FIG. 13.

S1504: The enabling driver sends a frequency increasing indication to a display driver chip.

For example, for execution of S1504, refer to S1304 in FIG. 13.

In an implementation, the frequency increasing indication may include frequency increasing reference information, to indicate the display screen to increase the display frame rate based on the frequency increasing reference information. For example, the frequency increasing reference information may include a frequency increasing magnification, and the frequency increasing magnification is greater than 1.

S1505: The display driver chip performs display refresh at a display frame rate A based on the frequency increasing indication.

As shown in FIG. 15A and FIG. 15B, in this example, before receiving the frequency increasing indication, the display driver chip may control the display screen to perform display refresh at a display frame rate B.

The display frame rate A is greater than the display frame rate B.

Through the operations of S1501 to S1505 in this embodiment of this application, related configuration of the frequency increasing processing may be completed. In other words, the frequency increasing processing includes S1501 to S1505.

S1506: The camera application sends a Vsync signal generation request 151 to a display synthesis module.

With reference to the descriptions about production and consumption of the buffer in the buffer queue in FIG. 4, when the scenario is switched (for example, when the operation 103 or the operation 106 is received), the camera application may further send the Vsync signal generation request 151 to the SurfaceFlinger, to trigger, based on a Vsync signal generated in a current scenario, delivery of a command and consumption and delivery for display of a new image.

S1507: The display synthesis module obtains a current display frame rate from the display driver chip.

S1508: The display driver chip sends the display frame rate A to a hardware composer.

S1509: The hardware composer sends the display frame rate A to a display interrupting module.

S1510: The display interrupting module sends the display frame rate A to the display synthesis module.

In this way, through S1507 to S1510, the SurfaceFlinger may obtain, from the DDIC of the display screen, that the current actual display frame rate is the display frame rate A.

S1511: The display synthesis module generates a plurality of first-type Vsync signals and a plurality of second-type Vsync signals based on a time interval T2 corresponding to the display frame rate A.

For example, the SurfaceFlinger may generate the plurality of first-type Vsync signals based on the display frame rate A. The first-type Vsync signal may be used to trigger consumption and delivery for display of a new image. For example, the SurfaceFlinger may sequentially generate a first-type Vsync signal V0, a first-type Vsync signal V1, and the like. A time interval between generation of the first-type Vsync signal V1 and generation of the first-type Vsync signal V0 may be T2.

The SurfaceFlinger may further generate the plurality of second-type Vsync signals based on the display frame rate A. The second-type Vsync signal may be used to trigger the camera application to deliver a rendering instruction for a new image. For example, the SurfaceFlinger may sequentially generate a second-type Vsync signal V0, a second-type Vsync signal V1, and the like. A time interval between generation of the second-type Vsync signal V1 and generation of the second-type Vsync signal V0 may also be T2.

In some implementations, the time interval T2 may be a reciprocal of the display frame rate A. That is, T2=1/A.

Therefore, the electronic device may correspondingly trigger corresponding operations based on arrival of the first-type Vsync signal and arrival of the second-type Vsync signal. For example, as shown in S1512 and S1513:
S1512: Each time one first-type Vsync signal arrives, the display synthesis module obtains image information from a buffer queue to perform synthesis and delivery for display, where a time interval between two adjacent first-type Vsync signals is T2.
S1513: Each time one second-type Vsync signal arrives, the camera application delivers a rendering instruction for a new image, where a time interval between two adjacent second-type Vsync signals is T2.

Therefore, through S1501 to S1513, the electronic device may perform frequency increasing on the display frame rate for the preset scenario. Therefore, when an image output frequency of a camera sensor does not change, the display frame rate is increased, so that the interval between the adjacent first-type Vsync signals is shortened, thereby improving a frequency of consumption and delivery for display of an image. Further, a problem such as image frame drop caused when delivery for display is not timely due to a problem such as a DDIC craft is avoided.

In the example shown in FIG. 15A and FIG. 15B, execution logic of the electronic device when the preset scenario is exited is further provided.

For example, as shown in S1514 to S1526:
S1514: A camera application determines that no SurfaceView exists.

In some implementations of this application, after each time of scenario switching, the camera application may determine whether the SurfaceView exists.

For example, in this example, the camera application may receive an operation 108 of the user, and correspondingly enter a gallery browsing scenario.

In this case, due to switching of the scenario, the camera application may perform S1514, to determine that no SurfaceView used to support display of a dynamic image stream exists.

S1515: The camera application sends an indication 133 to a display engine.

S1516: The display engine sends an indication 134 to an enabling driver.

S1517: The enabling driver sends a frequency increasing exit indication to a display driver chip. In some other embodiments, the frequency increasing exit indication may also be referred to as a frequency decreasing indication.

S1518: The display driver chip performs display refresh at a display frame rate B based on the frequency increasing exit indication.

Therefore, through execution of S1514 to S1518, the electronic device may perform frequency increasing exit processing (that is, frequency decreasing processing) after exiting the preset scenario and entering a new display scenario. In this way, the electronic device may perform production, consumption, and delivery for display of a new image based on the display frame rate B that is before the frequency increasing.

S1519: The camera application sends a Vsync signal generation request 152 to a display synthesis module.

S1520: The display synthesis module obtains a current display frame rate from the display driver chip.

S1521: The display driver chip sends the display frame rate B to a hardware composer.

S1522: The hardware composer sends the display frame rate B to a display interrupting module.

S1523: The display interrupting module sends the display frame rate B to the display synthesis module.

S1524: The display synthesis module generates a plurality of first-type Vsync signals and a plurality of second-type Vsync signals based on a time interval T1 corresponding to the display frame rate B.

S1525: Each time one first-type Vsync signal arrives, the display synthesis module obtains image information from a buffer queue to perform synthesis and delivery for display, where a time interval between two adjacent first-type Vsync signals is T1.

S1526: Each time one second-type Vsync signal arrives, the camera application delivers a rendering instruction for a new image, where a time interval between two adjacent second-type Vsync signals is T1.

It may be understood that, for execution of S1519 to S1526, respectively refer to S1506 to S1513. In this way, the electronic device can perform production or consumption based on the display frame rate B that is after the frequency decreasing processing.

It may be understood that, to implement the foregoing functions, the electronic device provided in the embodiments of this application includes a corresponding hardware structure and/or software module for performing the functions. A person skilled in the art easily realizes that the embodiments of this application may be implemented in hardware or a combination of hardware and computer software with reference to the units and algorithm steps in the examples described in the embodiments disclosed in this specification. Whether a function is implemented by hardware or computer software driving hardware depends upon a particular application and design constraint of the technical solution. A person skilled in the art may use different methods to implement the described functions for each particular application, but it should not be considered that the implementation goes beyond the scope of the embodiments of this application.

In the embodiments of this application, division on functional modules of the electronic device may be performed based on the method examples. For example, the functional modules may be correspondingly divided for each function, or two or more functions may be integrated in one processing module. The integrated module may be implemented in a form of hardware or in a form of a software functional module. It should be noted that, in the embodiments of this application, module division is an example, and is merely a logical function division. In actual implementation, another division manner may be used.

The solutions provided in the embodiments of this application are described above mainly from perspectives of the functional modules. A person skilled in the art easily realizes that this application may be implemented in hardware or a combination of hardware and computer software with reference to the units and algorithm steps in the examples described in the embodiments disclosed in this specification. Whether a function is implemented by hardware or computer software driving hardware depends upon a particular application and design constraint of the technical solution. A person skilled in the art may implement the described function by using different methods for each particular application, but such implementation is not to be considered to go beyond the scope of this application.

The integrated module may be implemented in a form of hardware or in a form of a software functional module. It should be noted that, in the embodiments of this application, module division is an example, and is merely a logical function division. In actual implementation, another division manner may be used.

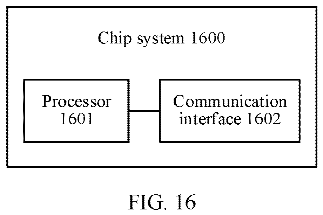

FIG. 16 is a schematic composition diagram of a chip system 1600. The chip system 1600 may include a processor 1601 and a communication interface 1602, configured to support a related device to implement the functions involved in the foregoing embodiments. In a possible design, the chip system further includes a memory, configured to store program instructions and data necessary for an electronic device. The chip system may include a chip, or may include a chip and another discrete component. It should be noted that, in some implementations of this application, the communication interface 1602 may also be referred to as an interface circuit.

It should be noted that all related content of the steps in the foregoing method embodiments may be cited in function descriptions of the corresponding functional modules. Details are not described herein again.

All or a part of the functions, actions, operations, or steps in the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, all or a part of the procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to specific features and embodiments thereof, it is clear that various modifications and combinations may be made to this application without departing from the spirit and scope of this application. Correspondingly, this specification and the accompanying drawings are merely example descriptions of this application defined by the appended claims, and are considered as having covered any and all modifications, changes, combinations, or equivalents within the scope of this application. It is clear that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A display control method, applied to an electronic device, wherein the electronic device is configured with a display screen; a camera application is further installed in the electronic device; and the method comprises:
receiving a first operation of a user;
starting the camera application in response to the first operation, and displaying a first interface on the display screen, wherein the first interface is a preview interface of the camera application, or the first interface is a video shooting interface of the camera application, wherein
a display frame rate of the display screen is a first frame rate when the first interface is displayed;
receiving a second operation of the user; and
displaying a second interface on the display screen in response to the second operation, wherein the second interface is different from the preview interface or the video shooting interface, wherein
the display frame rate of the display screen is a second frame rate when the second interface is displayed; and
the first frame rate is greater than the second frame rate.

2. The method according to claim 1, wherein before the receiving a first operation of the user, the method further comprises:
displaying, by the electronic device, a third interface on the display screen, wherein the third interface is a main interface of the electronic device, and a display frame rate of the electronic device is the second frame rate.

3. The method according to claim 1 or 2, wherein the electronic device is configured with a camera module, and the camera module is configured to obtain image information of a shooting scenario after the camera application runs; and
a memory of the electronic device is configured with a buffer queue, the buffer queue is used to store a to-be-displayed image, and the to-be-displayed image is generated based on the image information obtained by the camera module; and
after the receiving the first operation, the method further comprises:
controlling, by the camera application, the image information to be obtained by the camera module; and
generating, by the electronic device, the to-be-displayed image based on the image information, and storing the to-be-displayed image into the buffer queue.

4. The method according to claim 3, wherein a frequency at which the camera module obtains the image information is a third frame rate, and the first frame rate is greater than or equal to the third frame rate.

5. The method according to any one of claims 1 to 4, wherein after the receiving a first operation of a user, the method further comprises:
determining, by the electronic device, that a first view is configured, wherein the first view is used to draw and synthesize a to-be-displayed image of the preview interface or the video shooting interface.

6. The method according to claim 5, wherein before the displaying the first interface, the method further comprises:
sending, by the electronic device, a frequency increasing indication to the display screen; and
configuring, by the display screen, the display frame rate as the first frame rate based on the frequency increasing indication, to facilitate display of the first interface.

7. The method according to claim 6, wherein the frequency increasing indication comprises a frequency increasing magnification, and the frequency increasing magnification is greater than 1; and
the first frame rate is equal to a product of the second frame rate and the frequency increasing magnification.

8. The method according to any one of claims 5 to 7, wherein after the receiving a first operation of a user, and before the displaying the first interface, the method further comprises:
sending, by the camera application, a first Vsync signal generation request to the electronic device; and
generating, by the electronic device based on the first Vsync signal generation request, a plurality of first Vsync signals based on a first time interval, wherein the first Vsync signal is used to trigger drawing and synthesis of an image in the buffer queue.

9. The method according to claim 8, wherein before the generating a plurality of first Vsync signals, the method further comprises:
obtaining, by the electronic device, a current display frame rate from the display screen based on the first Vsync signal generation request; and
the generating a plurality of first Vsync signals based on a first time interval comprises:
determining, by the electronic device, the first time interval based on the current display frame rate, and generating one of the first Vsync signals every the first time interval.

10. The method according to either of claims 8 and 9, wherein
the displaying, by the electronic device, a first interface on the display screen comprises:
obtaining, by the electronic device, first image information from the buffer queue after the first Vsync signals are generated, wherein the first image information corresponds to the first interface;
performing drawing and synthesis in the first view based on the first image, to obtain a to-be-displayed image corresponding to the first interface; and
displaying, by the electronic device, the first interface on the display screen based on the to-be-displayed image.

11. The method according to any one of claims 1 to 4, wherein the electronic device is configured with a display engine and a display driver module, and the display driver module is configured with an enabling driver unit; and
the method further comprises:
determining, by the camera application, that a first view is configured, wherein the first view is used to draw and synthesize a to-be-displayed image of the preview interface or the video shooting interface;
sending, by the camera application, first indication information to the enabling driver unit by using the display engine, wherein the first indication information is used to indicate the enabling driver unit to enter a preset scenario, and the preset scenario comprises a preview scenario and a view shooting scenario;
generating, by the enabling driver, a frequency increasing indication based on the first indication information, wherein the frequency increasing indication is used to indicate a display driver chip DDIC of the display screen to increase the display frame rate; and
receiving, by the DDIC, the frequency increasing indication, and adjusting the display frame rate of the display screen to the first frame rate based on the frequency increasing indication.

12. The method according to claim 11, wherein the electronic device is configured with a display synthesis module SurfaceFlinger; and
the method further comprises:
sending, by the camera application, a first Vsync signal generation request to the SurfaceFlinger;
obtaining, by the SurfaceFlinger from the DDIC based on the first Vsync signal generation request, that a current display frame rate is the first frame rate;
generating, by the SurfaceFlinger, one first Vsync signal every first time interval, wherein the first time interval corresponds to the first frame rate; and
each time one first Vsync signal is generated, obtaining, by the SurfaceFlinger, the image information from the buffer queue in the memory of the electronic device for drawing and synthesis, and sending the to-be-displayed image obtained through drawing and synthesis to the display screen for display.

13. The method according to any one of claims 5 to 10, wherein after the receiving a second operation of the user, the method further comprises:
determining, by the electronic device, that a configured view does not comprise the first view.

14. The method according to claim 13, wherein before the switching, by the electronic device, to display the second interface, the method further comprises:
sending, by the electronic device, a frequency decreasing indication to the display screen; and
configuring, by the display screen, the display frame rate as the second frame rate based on the frequency decreasing indication, to facilitate display of the second interface.

15. The method according to claim 13 or 14, wherein
after the receiving a second operation of the user, and before the displaying a second interface, the method further comprises:
sending, by the camera application, a second Vsync signal generation request to the electronic device; and
generating, by the electronic device based on the second Vsync signal generation request, a plurality of second Vsync signals based on a second time interval, wherein the second Vsync signal is used to trigger drawing and synthesis of an image in the buffer queue.

16. The method according to claim 15, wherein before the generating a plurality of second Vsync signals, the method further comprises:
obtaining, by the electronic device, the current display frame rate from the display screen based on the second Vsync signal generation request; and
the generating a plurality of second Vsync signals based on a second time interval comprises:
determining, by the electronic device, the second time interval based on the current display frame rate, and generating one of the second Vsync signals every the second time interval.

17. The method according to any of claims 14 and 16, wherein
the displaying, by the electronic device, a second interface on the display screen comprises:
obtaining, by the electronic device, second image information from the buffer queue after the second Vsync signals are generated, wherein the second image information corresponds to the second interface;
performing drawing and synthesis in the second view based on the second image, to obtain a to-be-displayed image corresponding to the second interface, wherein the second view is different from the first view, and the second view is used to draw and synthesize a to-be-displayed image of another interface different from the preview interface or the video shooting interface; and
displaying, by the electronic device, the second interface on the display screen based on the to-be-displayed image corresponding to the second interface.

18. The method according to any one of claims 5 to 10 or any one of claims 13 to 17, wherein the first view comprises a surface view SurfaceView.

19. An electronic device, wherein the electronic device comprises a memory, one or more processors, and one or more display screens; and the memory, the processors, and the display screens are coupled, wherein
the memory is configured to store computer program code, the computer program code comprises computer instructions, and when the processor executes the computer instructions, the electronic device is enabled to perform the method according to any one of claims 1 to 18.

20. A chip system, wherein the chip system is applied to an electronic device; the chip system comprises one or more interface circuits and one or more processors; the interface circuits and the processors are interconnected by using lines; the interface circuit is configured to receive a signal from a memory of the electronic device, and send the signal to the processor, wherein the signal comprises computer instructions stored in the memory; and when the process executes the computer instructions, the electronic device performs the method according to any one of claims 1 to 18.
